# EUROPEAN PATENT APPLICATION

(11) **EP 0 911 796 A1**
(43) Date of publication of application: **28.04.1999**
(21) Application number: 98308640.6
(22) Date of filing: 22.10.1998
(51) Int. Cl.: G09G 3/36

(54) **Matrix substrate, liquid crystal display device and projection type liquid crystal display apparatus employing the same with reduced field-through effect between subsequent scan lines**

(30) Priority: 24.10.1997 JP 292464/97
(71) Applicant: CANON KABUSHIKI KAISHA, Tokyo (JP)
(72) Inventor: Watanabe, Takanori, Ohta-ku, Tokyo (JP); Kurematsu, Katsumi, Ohta-ku, Tokyo (JP); Koyama, Osamu, Ohta-ku, Tokyo (JP)
(74) Representative: Beresford, Keith Denis Lewis

(57) **Abstract**

A novel active matrix type liquid crystal display device is provided for displaying an image by scanning two-dimensional liquid crystal panel with a vertical shift register and a horizontal shift register. The liquid crystal display device has an array of pixel switches for turning on and off liquid crystal pixels and pixel electrodes for applying voltages to the liquid crystal pixels, wherein the gate of the pixel switch turns on plural lines of the liquid crystal pixels simultaneously for a prescribed time period, wherein the plural lines of the pixels are turned on at the same time, and the timing of the change from the turned-on state to a turned-off state is different for the respective lines. With this structure, the number of the transistors constituting the shift register is reduced, and the field-through between the adjacent pixels is decreased, which enables high integration and high fineness of the image display.

## Description

### BACKGROUND OF THE INVENTION

### Field of the Invention

The present invention relates to a matrix substrate, a liquid crystal display device, and a projection type liquid crystal display apparatus employing the matrix substrate. Particularly, the present invention relates to an active matrix type of liquid crystal display device having a picture element electrode array and controlling the display timing by horizontal and vertical shift registers.

### Related Background Art

Lately, display apparatuses employing liquid crystals are used not only for information communication machines but are used widely for displaying image information because of light weight, thinness, and possibility of miniaturization. For image display in a size of 30 inches or larger, the image formed by liquid crystals are not directly applicable. For such a large image display, projection type liquid crystal display apparatuses are generally used in which the liquid crystal image is enlarged by projection by utilizing the small size and light weight of the liquid crystal device. Such a liquid crystal image is formed by any of two matrix systems: a simple matrix system employing a matrix wiring only, and an active matrix system having a switching element like a TFT (thin film transistor) for each of the pixels.

An example of the conventional active matrix type of liquid crystal display devices is explained below.

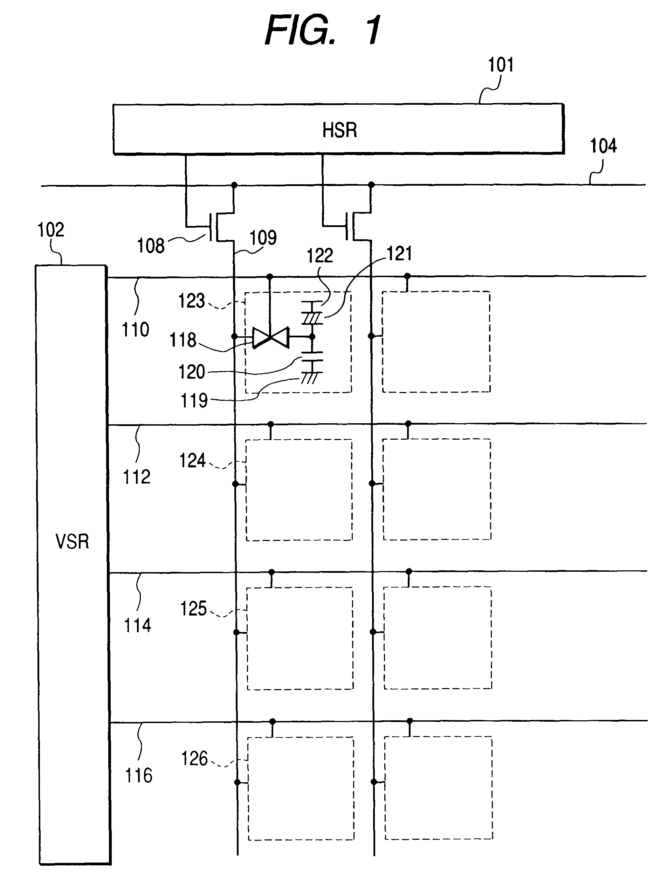

Fig. 1 shows a circuit of an active matrix liquid crystal display device.

Image signals are inputted to video line 104, sampled therefrom by signal transfer switch 108 according to the timing of output from horizontal shift register 101 (hereinafter referred to as HSR), and then transferred to signal line 109.

The sampled signal transferred to signal line 109 is held by capacitor 120 by turning on successively gate lines 110, 112, 114, 116 by output of vertical shift register 102 (hereinafter referred to as VSR (vertical shift register)) through pixel switch 118 on the line of pixels 123, 124, 125, and 126. The signal stored in capacitor 120 is applied to liquid crystal layer 121 between capacitor 120 and counter electrode 122 to change the optical property of the liquid crystal and to display an image.

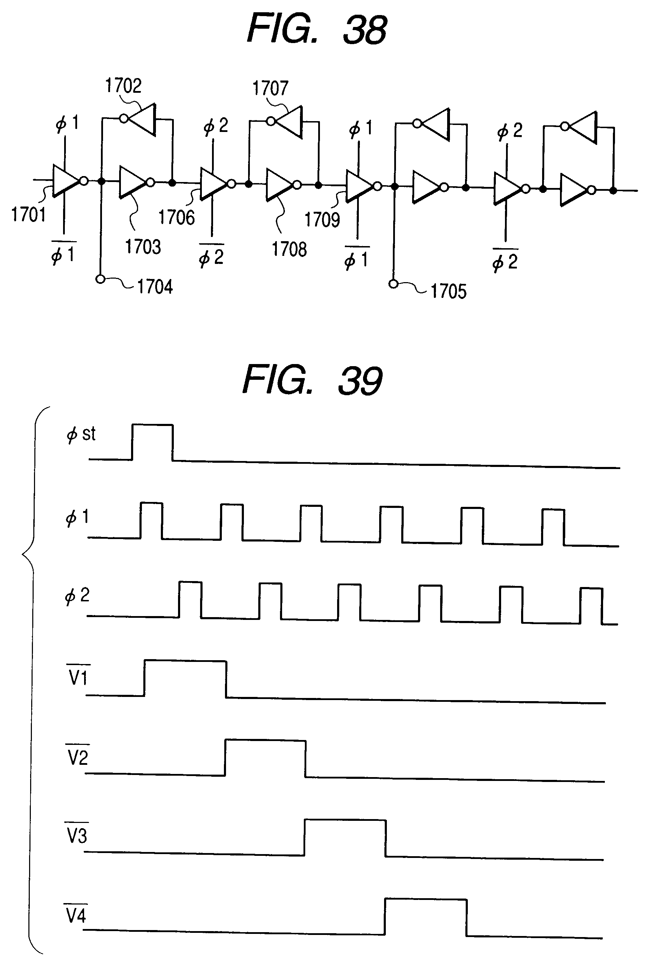

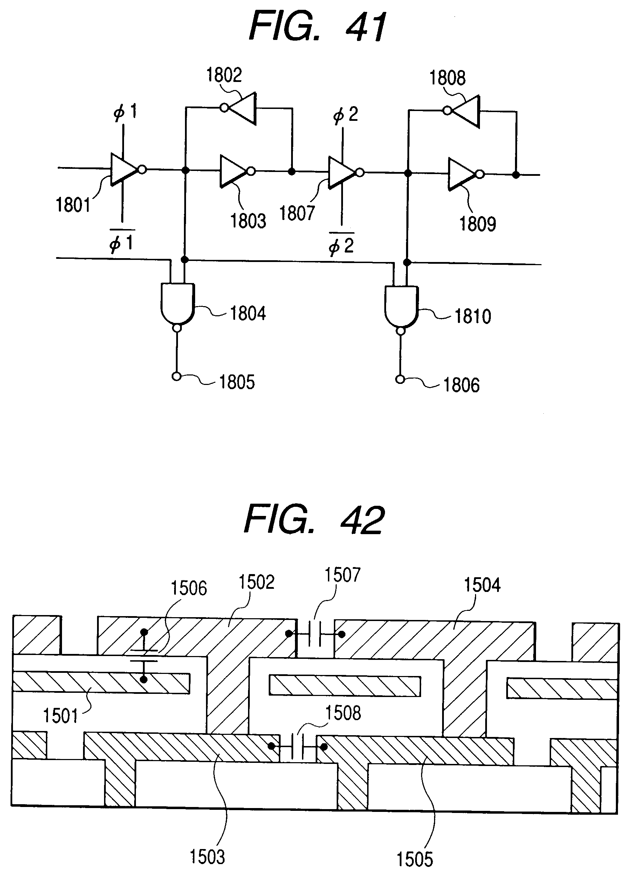

Fig. 38 shows an example of a circuit diagram of VSR 102. In Fig. 38, the output from inverter 1701 for synchronization with pulse Φ1 is held by a latch circuit constituted of inverters 1702, 1703, and is outputted to output 1704. Fig. 39 shows the input and output waveforms. In Φ1 synchronization, each of the bits is latched by inverters 1702, 1703 to produce pulse V1 and is held for a prescribed time. In Φ2 synchronization, inverter 1706 is turned on to latch it by inverters 1707, 1708. In the subsequent Φ1 synchronization, pulse V2 is produced by inverter 1709, and is held for a prescribed time. The above process is repeated in synchronizing with Φ1 to turn on successively pulse V1 to pulse V4. The number of the transistors can be decreased in comparison with the above constitution by the constitution shown in Fig. 41. In Fig. 41, one output drive is constituted of Φ1-synchronized inverter 1801, latch circuit inverters 1802, 1803, and NAND 1804, and another one output drive is constituted of Φ2-synchronized inverter 1807, latch circuit inverters 1808, 1809, and NAND 1810. Since inverter 1801 and inverter 1807 are turned on with an overlapping time, the outputs of pulses V1 to V4 of successively scanned VSR as shown in Fig. 39 are obtained in the same operation as in the constitution shown in Fig. 38 by applying forbiddance by NAND 1804, 1810.

The above liquid crystal display device involves disadvantages when it is driven with a horizontal shift register, a vertical shift register or the like by the above method, as below:
(1) Many transistors are used for constituting the shift register. Therefore, high integration and high fineness cannot readily be achieved. Further, the larger size of chip naturally decreases the number of the produced chips, resulting in low yield of the chips and high production cost.
(2) Field-through occurs between the adjacent pixels, which is described below in detail.

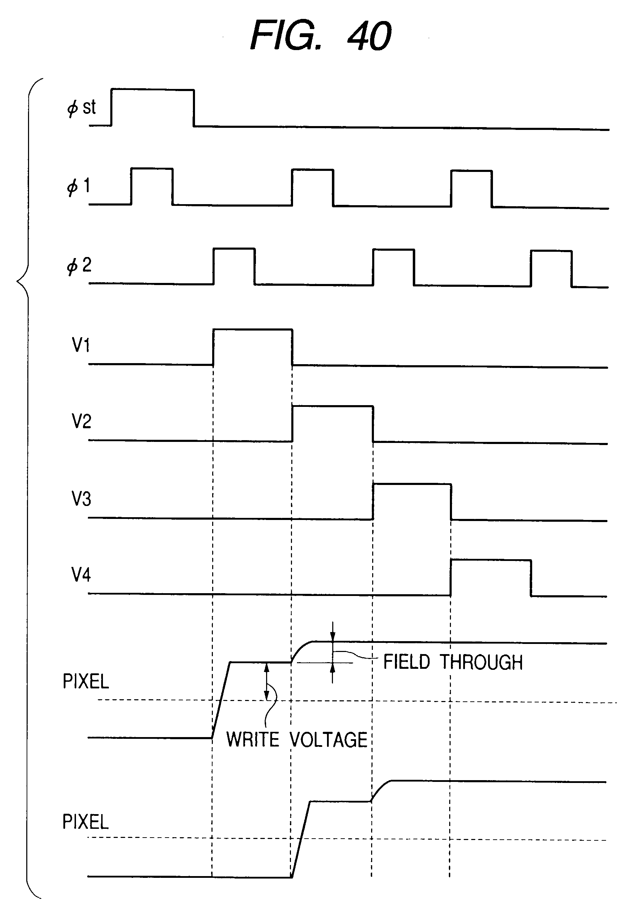

In the above system, after writing in a pixel 1 (123), gate 110 is turned off, and then gate 112 is turned on. Therefore, the potential of pixel 1 (123) varies owing to parasite capacity coupling with pixel 2 (124), whereby the prescribed voltage cannot be applied to the liquid crystal. This phenomenon is explained by reference to the plan view of the arrangement shown in Fig. 42. In Fig. 42, pixel switch 118 and the peripheral circuits are omitted. The signal from pixel switch 118 is applied through wirings 1503, 1505 to pixel electrodes 1502, 1504. The potential of pixel electrode 1502 is held by capacitance 1506 with electroconductive layer 1501. Pixel electrode 1502 is connected to switch 118 in Fig. 1, and the signal is applied to pixel 123. At the subsequent timing, signal is written into pixel electrode 1504 corresponding to pixel 124. At this moment, the potential of pixel electrode 1502 varies with the potential change of pixel electrode 1504 by coupling with parasite capacitance 1507. Consequently, the prescribed voltage cannot be applied to the liquid crystal to lower the image contrast, and to prevent high gradation of display. Further, parasite capacitance 1508 is produced between wiring 1503 and wiring 1505 connected to switch 118 to cause field through at this parasite capacitance 1508. This phenomenon is more significant with increase of layers of metal wiring, for example, as shown in timing of the pixel state in Fig. 40 in comparison with Fig. 39.

Japanese Patent Application Laid-Open No. 7-56544 (Fujitu Ltd.) discloses a method for solving the above problems of parasite coupling between adjacent pixels. In this method, for charging one pixel, a second switch is provided which charges preliminarily the data voltage of the preceding line as a pseudo-voltage before the charging of the intended voltage of the line in addition to the original switch. Thereby, sufficient charging time can be secured even with a display of ultrafine display, enabling high-quality image display. However, each of the pixels has plural switches, which complicates the structure and makes the device larger.

Japanese Patent Application Laid-Open No. 9-81089 (Fujitu Ltd.) discloses a method in which signal voltages are applied simultaneously to plural data bus lines of a liquid crystal display apparatus. In this method, two lines are selected simultaneously to lengthen an image signal writing time for one line. However, two image signal lines should be provided to send image signals independently to each of the selected lines. Therefore, the device becomes necessarily complicated and large similarly as above.

Further, Japanese Patent Publication No. 7-31321 (Hitachi Ltd.) enables a low-speed switching element even at a high speed data input in capacitive load scanning of a liquid crystal display device by overlapped scanning by providing two series of shift registers. However, the two series of the shift registers inevitably render the circuit structure complicated.

### SUMMARY OF THE INVENTION

The object of the present invention is intended to solve the problems involved in conventional techniques.

According to an aspect of the present invention, there is provided an active matrix type of liquid crystal device for displaying an image by scanning two-dimensional liquid crystal panel with a vertical shift register and a horizontal shift register, having an array of pixel switches for turning on and off liquid crystal pixels and pixel electrodes for applying voltages to the liquid crystal pixels, wherein the gate of the pixel switch turns on plural lines of the liquid crystal pixels simultaneously for a prescribed time period in accordance with output of the vertical shift register, and signals are written in at least one the turned-on plural lines of pixels, and the same signals are applied to another line of pixels for precharging.

According to another aspect of the present invention, in the aforementioned liquid crystal display device, plural lines of the pixels are turned on at the same time, and the timing of the change from the turned-on state to a turned-off state is different for the respective lines. In the aforementioned liquid crystal display device, the lines turned on simultaneously include an n-th line and a (n+1)th line (n is an integer). Otherwise, in the aforementioned liquid crystal display device, the lines turned on simultaneously include an n-th line and a (n+2)th line (n is an integer). Further in the above liquid crystal device, the polarity of the image signals are reversed for every one horizontal scanning period, or for every one bit.

In another embodiment, the aforementioned liquid crystal display device has the liquid crystal panel having a structure of successive lamination of a semiconductor substrate, active matrix driving circuits, pixel electrodes, a liquid crystal layer, transparent counter electrodes, a sheet glass, and microlenses.

In still another embodiment, the aforementioned liquid crystal display device has one element of the microlenses provided for three pixel electrodes.

In a further embodiment, the aforementioned liquid crystal display device has at least three liquid crystal panel for three colors, and blue light is separated by a high-reflective mirror and a blue-reflecting mirror, and red color light and green light are separated by red-reflecting mirror and a green/blue reflecting dichroic mirror, and the respective liquid crystal panels are projected.

### BRIEF DESCRIPTION OF THE DRAWINGS

Fig. 1 is a block diagram of a circuit of a liquid crystal display device of an embodiment of the present invention.

Fig. 2 is a circuit diagram of a shift register of an embodiment of the present invention.

Fig. 3 is a timing chart of a shift register of an embodiment of the present invention.

Fig. 4 is a timing chart of a shift register of another embodiment of the present invention.

Fig. 5 is a timing chart of a shift register of still another embodiment of the present invention.

Fig. 6 is a circuit diagram of a shift register of a still another embodiment of the present invention.

Fig. 7 is a timing chart of a shift register of still another embodiment of the present invention.

Fig. 8 is a block diagram of a circuit of a liquid crystal display device of still another embodiment of the present invention.

Fig. 9 is a circuit diagram of a shift register of still another embodiment of the present invention.

Fig. 10 is a timing chart of a shift register of still another embodiment of the present invention.

Fig. 11 is a block diagram of a circuit of a liquid crystal display device of still another embodiment of the present invention.

Fig. 12 is a block diagram of a circuit of a liquid crystal display device of still another embodiment of the present invention.

Fig. 13 is a block diagram of a circuit of a liquid crystal display device of still another embodiment of the present invention.

Fig. 14 is a block diagram of a liquid crystal display device of still another embodiment of the present invention.

Fig. 15 is a block diagram of a circuit of a liquid crystal display device of still another embodiment of the present invention.

Fig. 16 is a sectional view of a chip of an embodiment of the present invention.

Fig. 17 is a sectional view of a liquid crystal element produced by CMP of the present invention.

Fig. 18 is a schematic circuit diagram of a liquid crystal device of the present invention.

Fig. 19 is a block diagram of a liquid crystal display device of an embodiment of the present invention.

Fig. 20 is a circuit diagram including a delay circuit of an input section of a liquid crystal device of the present invention.

Fig. 21 is a schematic diagram of a liquid crystal panel of a liquid crystal device of the present invention.

Fig. 22 is a schematic diagram of a liquid crystal projector of a liquid crystal device of the present invention.

Fig. 23 is a circuit block diagram showing the interior of a liquid crystal projector of the present invention.

Figs. 24A, 24B and 24C illustrate the entire constitution of an optical system of a projection type liquid crystal display apparatus of an embodiment of the present invention.

Figs. 25A, 25B and 25C are diagrams showing light reflection characteristics of a dichroic mirror employed in the optical system of a projection type liquid crystal display device of the present invention.

Fig. 26 is a perspective view of a color separating illumination section of an optical system of a projection type liquid crystal display apparatus of the present invention.

Fig. 27 is a sectional view of an embodiment of a liquid crystal panel of the present invention.

Figs. 28A, 28B and 28C are drawings for explaining the principle of color separation and color synthesis in a liquid crystal panel of the present invention.

Fig. 29 is an enlarged partial plan view of an embodiment of the liquid crystal panel of the present invention.

Fig. 30 is a partial constitution diagram of an optical projection system of a projection type display apparatus of the present invention.

Fig. 31 is a block diagram showing a driving circuit system of a projection type display apparatus of the present invention.

Fig. 32 is a diagram showing a part of enlarged projected image on a screen of an embodiment of a projection type display apparatus of the present invention.

Fig. 33 is an enlarged partial plan view of an embodiment of a liquid crystal panel of the present invention.

Fig. 34 is an enlarged partial plan view of a liquid crystal panel of an embodiment of the present invention.

Figs. 35A and 35B are respectively a partial enlarged plan view and a partial enlarged sectional view of an embodiment of a liquid crystal panel of the present invention.

Fig. 36 is a partial enlarged sectional view of a conventional transmission type liquid crystal panel having a microlens.

Fig. 37 is a diagram showing a part of enlarged projected image on a screen of a conventional display apparatus employing a transmission type liquid crystal panel having a microlens.

Fig. 38 is a circuit diagram of a shift register of an embodiment of the present invention.

Fig. 39 is a timing chart of a shift register of an embodiment of the present invention.

Fig. 40 is a timing chart of a shift register of another embodiment of the present invention.

Fig. 41 is a circuit diagram of a shift register of another embodiment of the present invention.

Fig. 42 is a sectional view of a chip of an embodiment of the present invention.

### DESCRIPTION OF THE PREFERRED EMBODIMENTS

### (Embodiment 1)

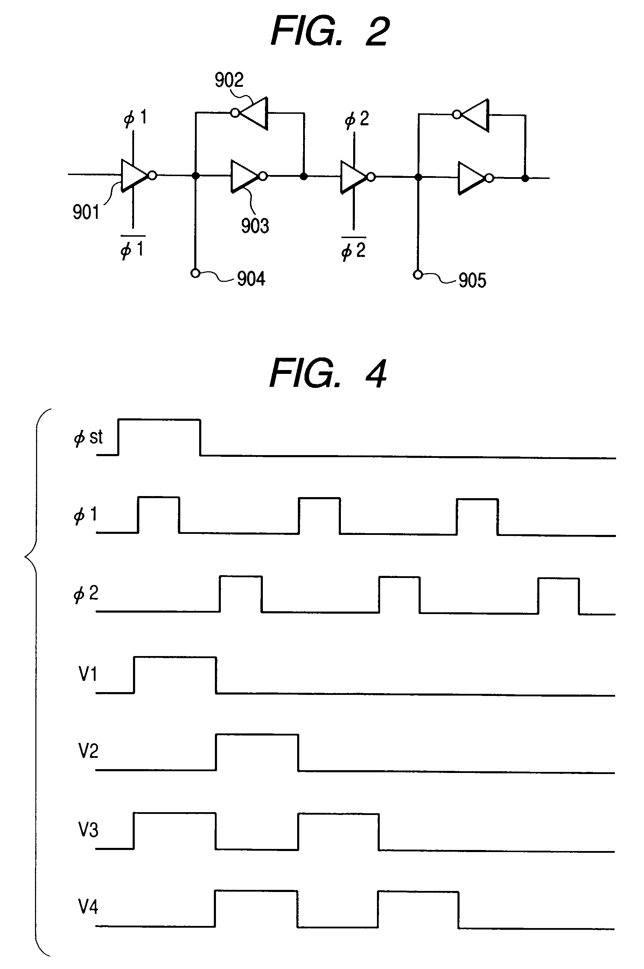

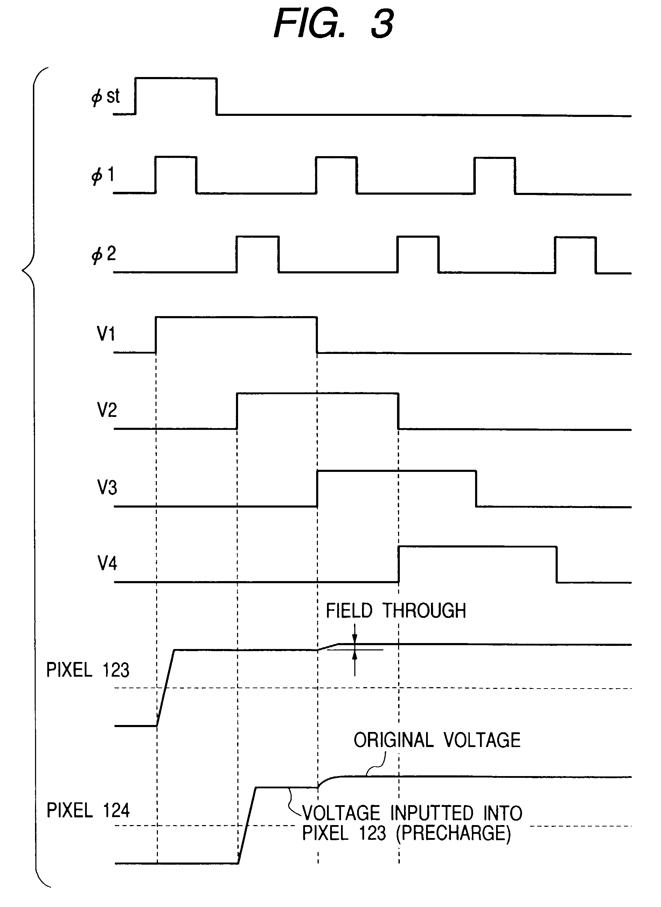

Fig. 1 shows the entire of a liquid crystal display device of a first embodiment of the present invention. Fig. 2 shows circuit constitution of the vertical shift register VSR thereof. Each of the bits of the vertical shift register VSR generates, following the start pulse, a first pulse Φ1, and a second pulse Φ2 delayed by half a pulse relative to the pulse Φ1, and outputs prescribed vertical signals in synchronization with the pulses Φ1 and Φ2. In this embodiment, the Φ1-synchronized bits and the Φ2-synchronized bits are generated alternately. In this embodiment, outputs 904 and 905 are overlapped. The waveforms of pulse V1 of the output 904 and pulse V2 of output 905 are shown in Fig. 3. In Fig. 3, pulses Φ1 and Φ2 are generated in accordance with start pulse Φst, and pulses V1, V3, ... for driving the liquid crystal pixel for one cycle of Φ1 are generated in synchronization with pulse Φ1; and pulses V2, V4, ... for driving the liquid crystal pixel for one cycle of Φ2 are generated in synchronization with pulse Φ2. In Fig. 3, the on-state bit is shown to be at a high level. However, the on-state bit may be designed to be at a low level without weakening the effect of this embodiment. The drive of the liquid crystal display device shown in Fig. 1 will be described.

In Fig. 1, gate lines 110 and 112 are firstly turned on, and signals to be written into pixel 123 are introduced into pixels 123 and 124. Then, pixel switch 118 is turned off. Next, gate line 114 is turned on, whereby signals to be written into pixel 124 are introduced into pixels 124 and 125 (hereinafter referred to as precharging). Potential variation in pixel 124 affects the potential of pixel 123. However, this is significantly different from the prior arts as described below. As shown in Fig. 3, applied pulses V1, V2, V3, ... are precharged in the initial period.
(1) In the drive of liquid crystal pixels, reversed polarity of voltages are alternately applied in order to prevent image sticking. Thereby the potential of pixel 124 changes greatly at the writing even for a stationary image. In conventional methods, the potential of pixel 123 made to swing significantly at the time of the writing. On the other hand, in this Embodiment, after a signal of reverse polarity is written into pixel 124, the gate of pixel 123 is closed, so that the potential swing of pixel 123 can be suppressed.
(2) In this Embodiment, the time for writing in one pixel is doubled including the precharge, so that the writing time for the pixel can be secured for a fine image. The pixel switch can be made more effective by constituting the pixel switch from polysilicon or amorphous silicon in this embodiment.
(3) In this Embodiment, the number of the steps of shift register is halved in comparison with the prior art shown in Fig. 38. In comparison with the prior art shown in Fig. 41, the transistors are decreased by the number corresponding to one NAND. This effect enables high integration of the circuit to achieve fineness of image and smaller size of the chip size. By the smaller chip size, a liquid crystal display apparatus can be produced at a low cost, a high yield, uniformity of the liquid crystals, and uniform image quality.

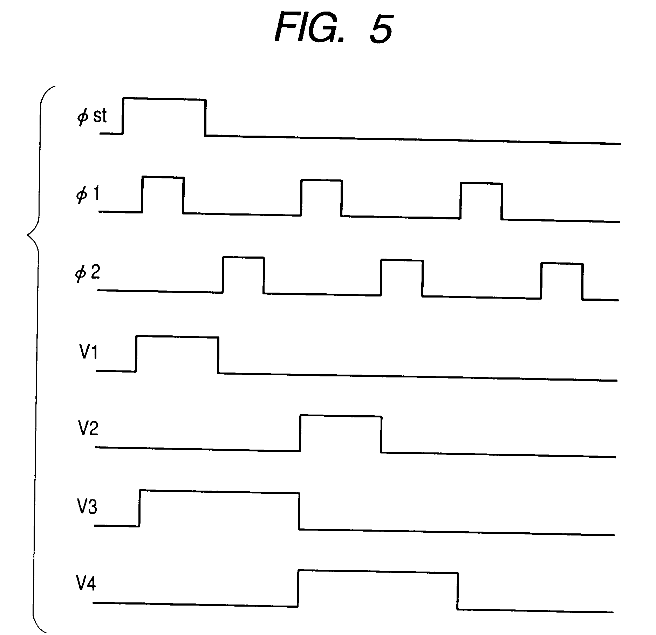

The constitution shown in Fig. 2 giving waveform shown in Fig. 3 is particularly effective in the case where two fields are scanned in one frame or where the polarity of the voltage written in the liquid crystal is reversed for every field. However, in writing with 1H reversion in which the polarity is reversed for every line, the effect is less in comparison with the writing with field reversion, since the polarity is reversed between pixels 123 and 124. However, even in driving with 1H reversion, the effect of this embodiment can be achieved by the driving as shown in Fig. 5, where the precharge is conducted at writing into pixels on the line after next. This is explained by reference to Fig. 1. In writing into pixel 123 by pulse V1, pixel 125 is precharged by pulse V3. Thereby, pixel 125 is precharged with a potential reverse to that written into the preceding field, and the variation in pixel 124 by pulse V2 can be suppressed. In the driving shown in Fig. 5, the image is correctly displayed by storing the image signal in a chip or an external memory, and then the image signals are introduced to the lines corresponding to V1, V2, V3, and V4. The pulses V1 to V4 to be supplied to gate lines in Fig. 5 can be produced as below.
(1) In Fig. 2, the signal (905) of the second bit of the shift register is AND of the signal (904) of the first bit with a signal (selection signal) from the exterior, or
(2) In Fig. 2, the signal (905) of the second bit of the shift register is AND of the signal (905) of the inherent second bit with a reversed signal of the third bit signal.

Otherwise, the effect of this Embodiment can be achieved by conducting writing into n-th line and (n+2)th line successively by the driving as shown in Fig. 4. Thereby, the driving pulses for odd number lines and the ones for even number lines are made symmetrical sufficiently, giving more uniform image quality.

Furthermore, this Embodiment is also effective with field-reversal driving in which the polarity of the electric field applied to the pixels is reversed for every field, 1H-reversal driving in which the polarity is reversed for every one horizontal line, and bit-reversal driving in which the polarity is reversed for every bit. This Embodiment is also effective in the cases where the duty ratio of time of turning-on of the gate line is different for every gate lines, where the time for precharge and the time for writing the image signal is different from each other, and where they are different for every gate lines.

In this Embodiment, gate line 114 is turned on at nearly the same time as the time of turning-off gate line 110, whereby the charge stored in pixel 125 may possibly affect pixel 123. This can be prevented by designing the circuit to cause delay within the circuit so that gate line 114 may be turned on at the moment when the potential of the gate line 110 has fallen below the pixel switch threshold to avoid overlapping, thereby improving the image quality. If more margin is necessary, the overlapping can be prevented by design of the circuit. An example therefor is shown as Embodiment 2.

### (Embodiment 2)

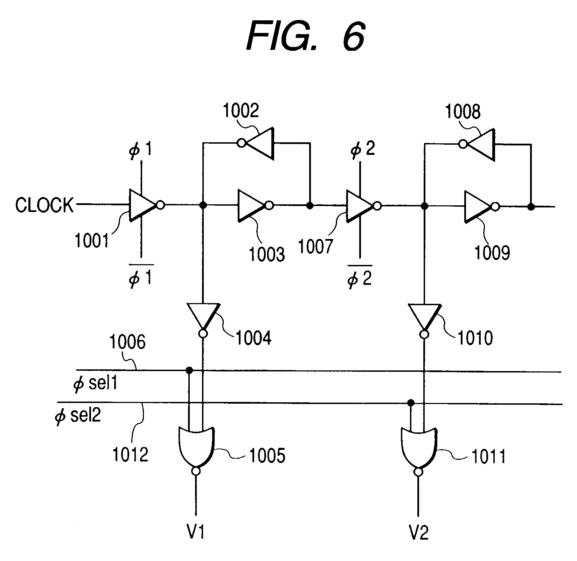

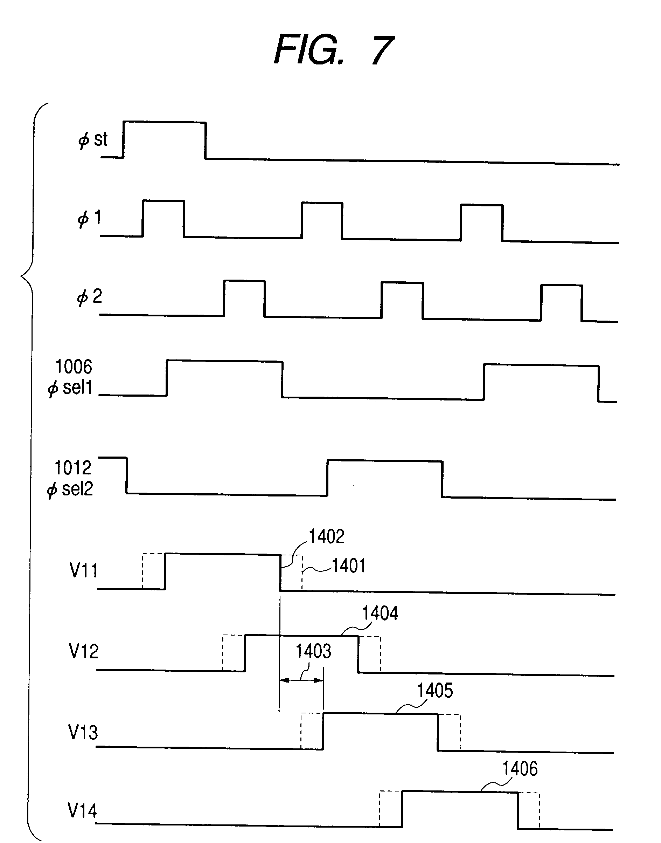

In Fig. 6, inverters 1001-1004, and NOR 1005 show a shift register and the output thereof. Inverters 1007-1010, and NOR 1011 show a next register and the output thereof. The outputs V1 and V2 of the respective bits are reversed by inverters 1004, 1010, and then are inputted to NORs 1005, 1011. Selection signal Φsel (1006) is inputted to NORs 1005, 1011. The output from NOR 1005 (or reversal signal thereof) is inputted as the output of VSR to gate lines to enable constitution of waveforms as shown in Fig. 7. The signal inputted to NOR 1005 is in the waveform of pulse V1 shown by dotted line 1401. From it, by taking NOR with selection signal Φsel, the solid-lined waveform 1402 can be produced. Similarly, solid-lined waveform 1405 of pulse V3 is produced. Solid-lined waveforms 1404, 1406 of pulses V2 and V4 are generated in the same manner by a second selection signal Φsel 1012 delayed by half a clock from the first selection signal Φsel.

Thereby, an interval shown by the numeral 1403 is provided between solid-lined waveform 1402 of pulse V1 and solid-lined waveform 1405 of pulse V3. The gate of pixel 125 is turned on after pixel switch 118 of pixel 123 has been completely shut off. The problem to be solved in this Embodiment is explained for the left-end pixels in Fig. 1. Depending on the drive system, the conditions can be severer at the middle of the displaying portion, or at the right-end pixel. For any case, this Embodiment is effective. In particular, the image quality is greatly improved by making the delay of gate lines larger, for example, by constituting gate lines 110-116 from polysilicon. This Embodiment is explained regarding an example employing NOR. However, the same effect can naturally be achieved by other circuit constitution provided that the on-state of the gate lines can be forbidden.

### (Embodiment 3)

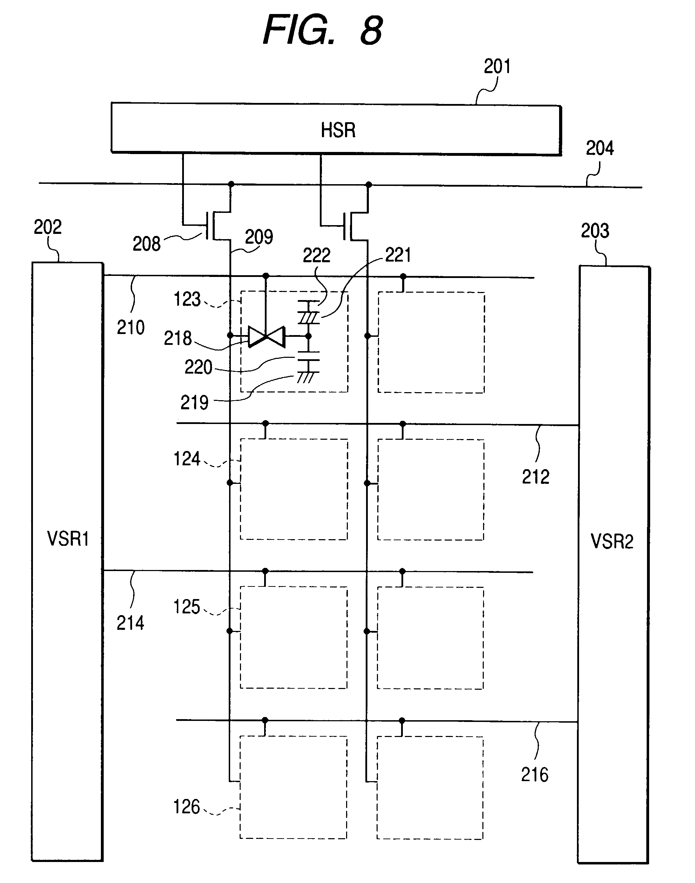

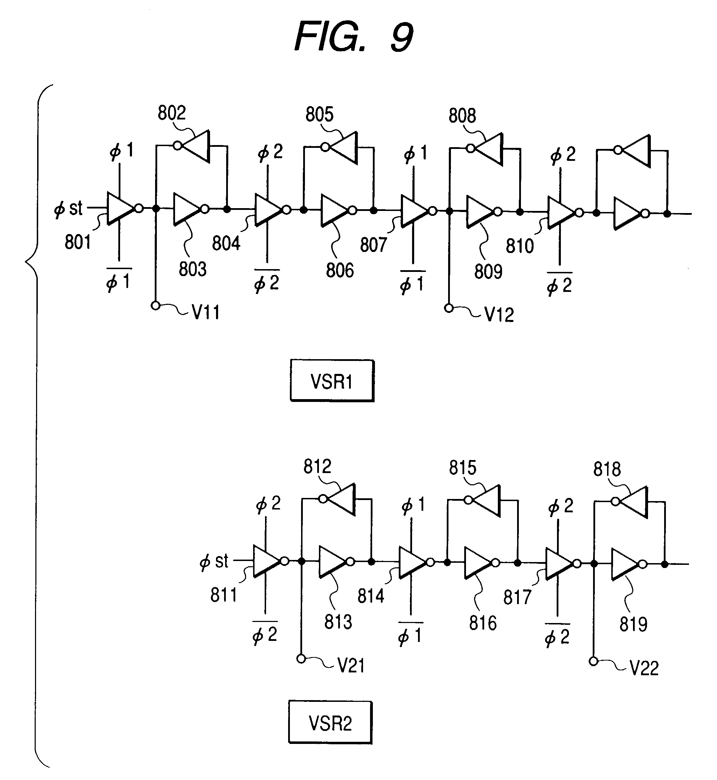

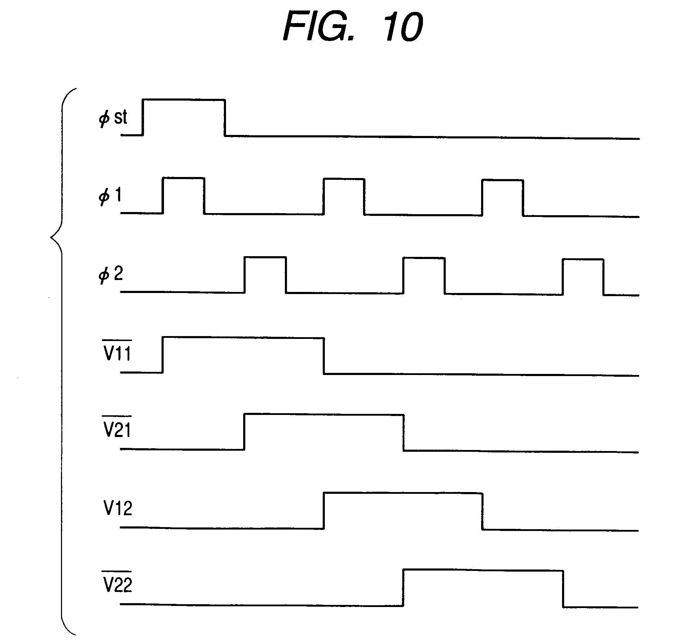

Fig. 8 is a diagram for explaining a third Embodiment of the present invention. In this Embodiment, two VSRs 202, 203 are provided, and gate lines 210, 214, .... are turned on and off by VSR1 (202), and gate lines 212, 216, .... are turned on and off by VSR2 (203). Liquid crystal pixels 123-125 comprises pixel switch 218 connected to signal line 209, liquid crystal 221, and capacitor 220 for storing the voltage applied to liquid crystal 221. The signal of video line 204 is outputted to signal line 209 by turning on and off signal transfer switch 208 in accordance with scanning pulse from HSR 201. With this constitution, the same effect as in Embodiment 1 is achieved by scanning by changing the timing of VSR1 and VSR2 by a period of 1H (horizontal scanning period). Fig. 9 shows examples of the circuit constitution of VSR1 and VSR2. Fig. 10 shows input and output waveforms. Output V11 (or its reversed signal) is inputted to gate line 210, output V12 (or its reversed signal) is inputted to gate line 214, output V21 (or its reversed signal) is inputted to gate line 212, and output V22 (or its reversed signal) is inputted to gate line 216. In Fig. 9, VSR1 (202) is started by start pulse Φst, and is reversed and transmitted by inverter 801 according to pulse Φ2 to output pulse V11 to gate line 110 and to be stored temporarily in the latch circuit constituted of inverters 802, 803. It is then reversed and transferred by pulse Φ2 to the next step to be stored in the latch circuit constituted of inverters 805, 806, and further reversed and transferred to output pulse V12. In the same manner, VSR2 (203) outputs pulses V21 and V22 through inverters 811, 817, etc. to gate lines 212, 216 in synchronization with pulse Φ2.

With such constitution, as shown in Fig. 10, the outputs from VSR1 and VSR2 are overlapped to achieve the same effect as in Embodiments 1 and 2.

Further in this Embodiment, the number of the gates controlled by one shift register is halved, whereby the pitch for one step of the shift register is doubled, enabling reduction of the number of transistors. Thereby, high integration can be achieved and the power consumption can be decreased.

### (Embodiment 4)

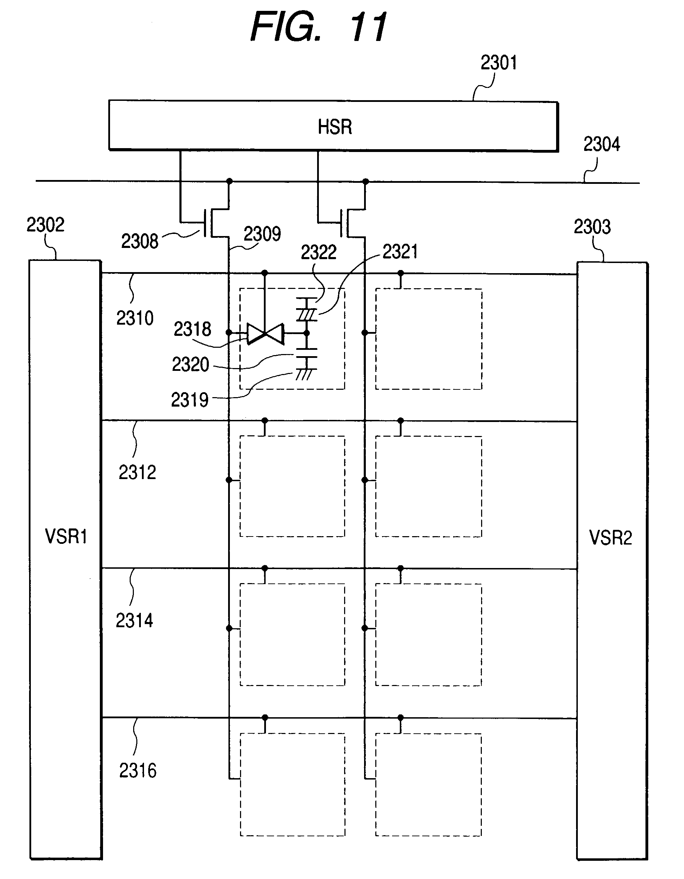

Embodiment 4 of the present invention is explained by reference to Fig. 11. In this Embodiment, VSR1 (2302) and VSR2 (2303) conduct the same operation. For example, one layout and its laterally reversed layout are provided preferably to equalize the delay caused by parasite resistance and parasite capacitance. In this case, the respective gate lines 2310-2316 are driven from the both sides, whereby the capacitances of gate lines 2310-2316 are apparently halved, and the resistances are also halved. Thereby, the delay of gate lines 2310-2316 is reduced to 1/4, and the horizontal blanking period is reduced correspondingly. Since the connections are made through transistors to the same power source and the load impedance is high, the electric current corresponds normally to the load. Further in this Embodiment, the margin between the on-state periods of the gate lines as shown in Fig. 7 can be made small. Thereby, Embodiments 1 and 2 can be practiced more readily and more effectively.

### (Embodiment 5)

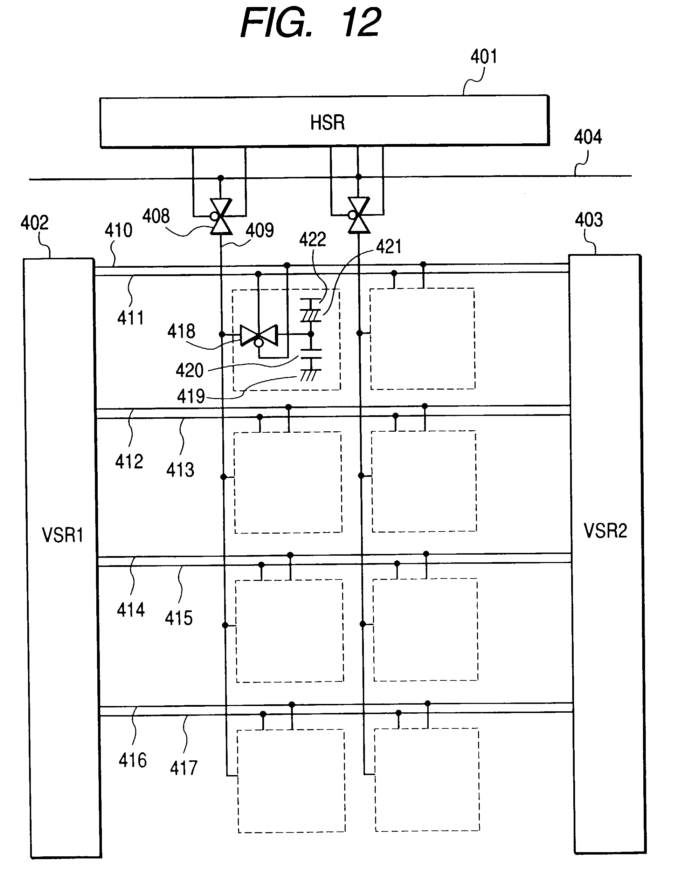

In Embodiments 1 to 4 above, the pixel switches are constituted of the same type of transistors. For example, the output from each of the VSR at a turned-on state is at a high level when the pixel switches are constituted of NMOS, whereas the output from each of the VSR at a turned-on state is at a low level when the pixel switches are constituted of PMOS. Either type of driving is possible by adding or removal of an inverter to or from the VSR. In this Embodiment, the pixel switch is constituted of CMOS. With this constitution, the output from the VSR is required to be positive and reversed. Thereby, the field-through of the pixel potential caused by the gate lines can be reduced to apply to the pixel electrodes voltages closer to the image signals. Fig. 12 shows an example of this Embodiment. In Fig. 12, the pixels on horizontal lines are scanned by VSR1 (402) and VSR2 (403), and the pixels on vertical lines are scanned by HSR 401, and a prescribed voltage is applied to each of the liquid crystal pixels in accordance with video signals from video line 404. Gate line 411 gives signals reverse to gate line 410; gate line 413, reverse to gate line 412; gate line 415, reverse to gate line 414; and gate line 417, reverse to gate line 416. In Fig. 12, signal transfer switch 408 is constituted of CMOS, which is convenient for production.

In this Embodiment, the field-through is suppressed, and the CMOS enables perfect transfer to lower the driving voltage.

This Embodiment is effective in the cases where signal transfer switch 408 has a CMOS structure and pixel switch 418 has an NMOS (or PMOS) structure, or where pixel switch 418 has a CMOS structure and signal transfer switch 408 has an NMOS (or PMOS) structure.

### (Embodiment 6)

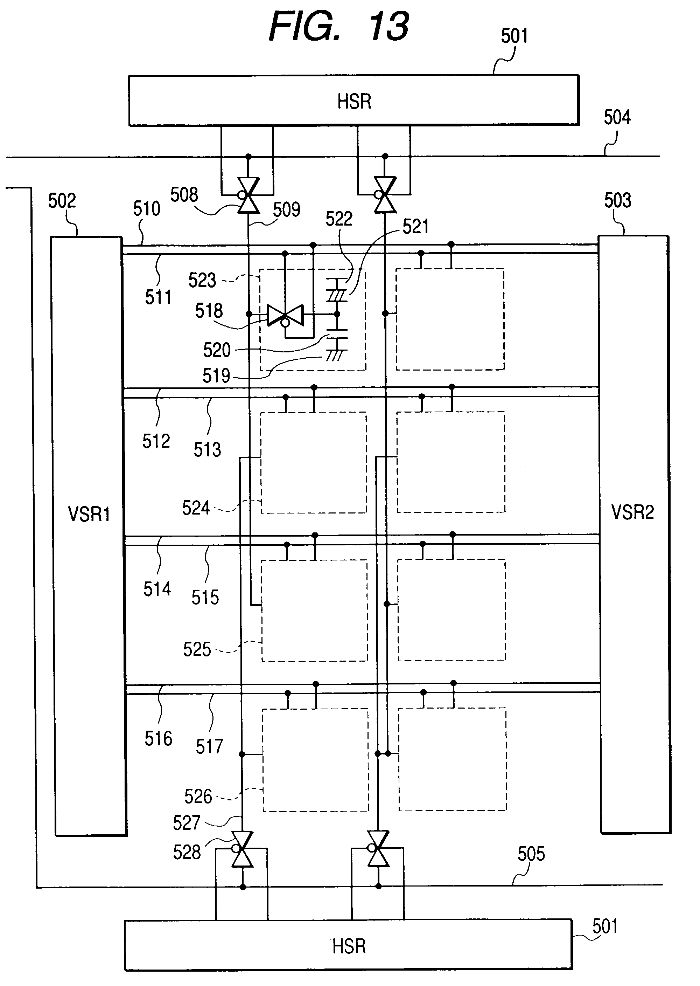

In Fig. 13, horizontal shift registers HSR are provided at the top and at the bottom, and the image signals are inputted dividedly to video lines 504, 505. In this Embodiment, signal line 509 for pixel 1 (523), and signal line 527 for pixel 2 (524) are written in respectively from video lines 504 and 505, possibly simultaneously. In other words, from video lines 504, 505, signal transfer switches 508, 528 may be simultaneously turned on; gate lines 510, 511, and gate lines 512, 513 may be simultaneously turned on; and pixel switch 518 of respective pixels 523, 524 may be turned on. Such driving operation enables high-speed writing, and liquid crystal display not only of stationary images but also of animation images with high fineness (larger number of pixels). In such driving, this Embodiment improves remarkably the image quality.

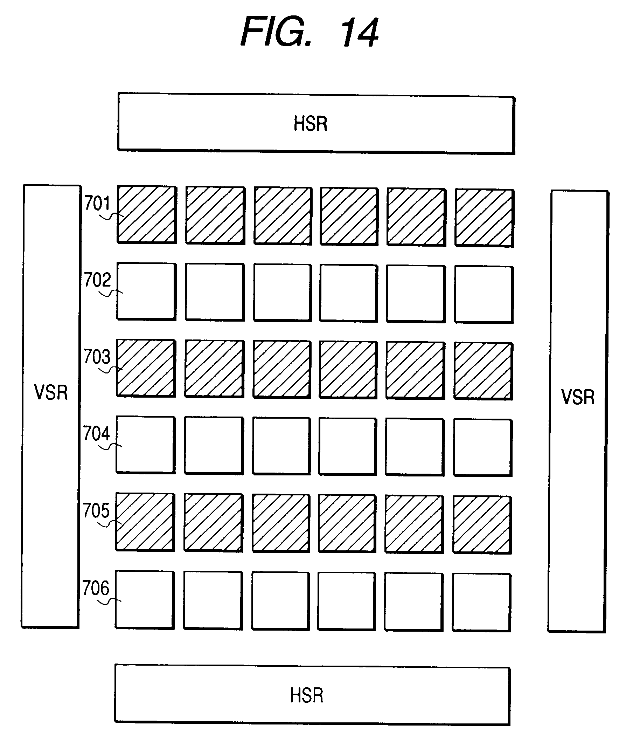

The principle thereof is explained by reference to Fig. 14. Fig. 14 ia a schematic plan view of the aforementioned liquid crystal display device. Pixels 701-706 on the liquid crystal panel are scanned vertically by horizontal shift registers HSR and horizontally by vertical shift registers VSR. The signals are written simultaneously in pixel 701 and pixel 702, and then simultaneously to pixels 703 and 704, and to pixels 705 and 706. In this operation, pixel 701 causes little field-through by capacity coupling with adjacent pixel 702, but potential variation occurs at writing in pixel 703. This changes the writing voltage on every other line to cause lateral stripes on a uniform pattern display. By application of this Embodiment, the driving can be conducted such that pixels 703, 704 are precharged, and pixels 705, 706 are precharged at writing into pixels 703, 704. Thereby, the field-through to pixels 702, 704 caused by adjacent pixels 703, 705 can be decreased and lateral stripes can be prevented.

In another driving method, the pixels in which writing is simultaneously conducted are shifted by one bit in every field: writing is conducted simultaneously in pixels 701, 702 in the EVEN field, and to pixels 702, 703 in the ODD field, whereby the uniformity of the image quality, and the display gradation can be improved. Furthermore, in Fig. 13, gate lines 510 and 512, gate lines 514 and 516, gate lines 511 and 513, and gate lines 515 and 517 may respectively be made common, whereby the pixel size can be made smaller.

In this Embodiment, writing is conducted simultaneously into two pixels. However, this Embodiment is effective in the case where writing is conducted simultaneously into three, four, or more pixels. In particular, when writing is conducted into more pixels in vertical direction, the spatial frequency of lateral stripes or of vertical stripes are smaller to render the stripes more remarkable and impair the image quality. This Embodiment is effective in such a case.

### (Embodiment 7)

Embodiment 6 above describes precharging of adjacent pixels by reference to Fig. 14. In this Embodiment 7, non-adjacent pixels are precharged. For example, pixels 702 and 704 are precharged in writing into pixels 701 and 703 in Fig. 14. In the subsequent writing into pixels 702 and 704, pixel 702 decreases the field-through in writing into pixel 703. This system is especially effective in the case where the polarity of image signals is reversed for every horizontal scanning period.

### (Embodiment 8)

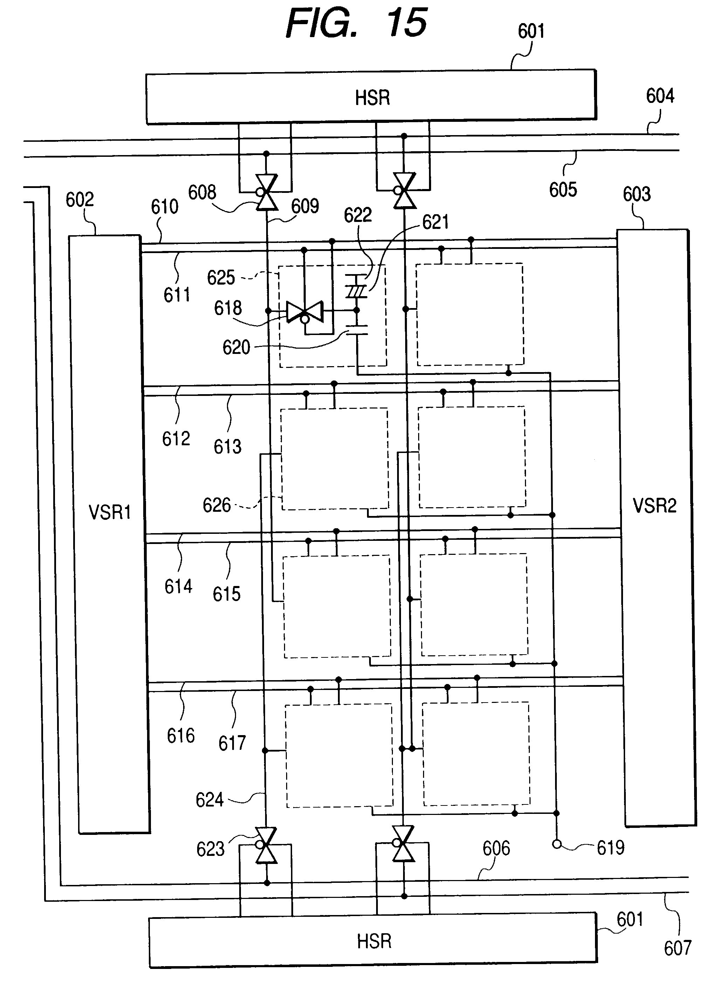

This Embodiment 8 is described by reference to Fig. 15. In this Embodiment, image signals are inputted dividedly to video lines 604, 605, 606, and 607. The other end of the respective capacitors 620 is kept at a prescribed common potential by application of voltage 619 from the outside. Gate lines 610-617 are driven by VSR1 (602) and VSR2 (603) at the right and left sides, and signal transfer switch 608 is driven by HSRs 601 at the top and bottom sides in the same manner as in Embodiment 6.

In this Embodiment, two pixels in the horizontal direction and other two pixels in the vertical direction are sampled at the same timing for one image signal. Therefore, writing can be conducted to four pixels simultaneously, resulting in high-speed driving. However, with increase of the number of video lines 604-607, the control of the output gain of the amplifier of the external circuit becomes more difficult to supply video signals to video lines 604-607 for driving. When the gains of the amplifiers are adjusted by monitoring the displayed image, the field-through between adjacent pixels makes uncertain the inherent voltage. Further, the potential variation between the adjacent pixels depends on writing voltage. Therefore the potential variation by field-through also changes depending on the writing pattern, and the gain adjustment is complicated.

According to this Embodiment, the quantity of the field-through is constant or little independently of the written pattern, which facilitates adjustment of amplifier gain even with plural number of video inputs. The further division is possible.

### (Embodiment 9)

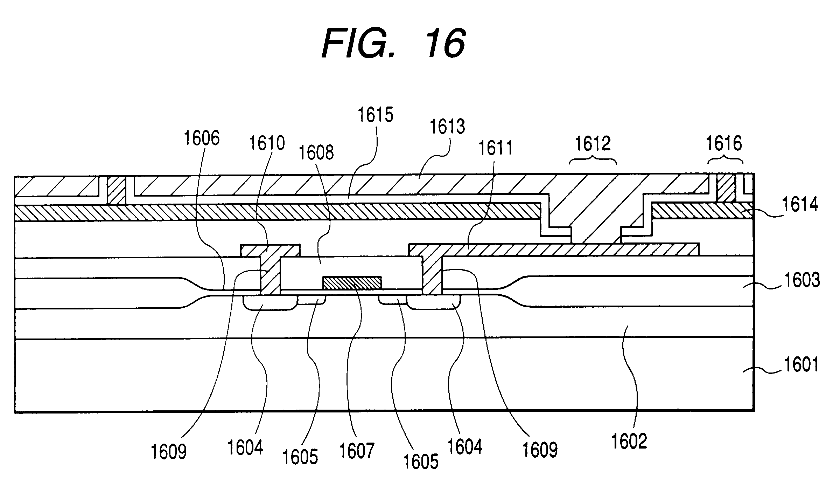

Fig. 16 is a sectional view of an example of a reflective type of liquid crystal display device. In Fig. 16, on semiconductor substrate 1601, are formed successively P-type or N-type semiconductor layer 1602, LOCOS layer 1603, source/drain 1604, low concentration portion 1605, insulating layer 1606, gate portion 1607, insulating layer 1608, and electrodes 1610, 1611. In this embodiment, the reflective pixel electrode is formed from Al, Al-Ag (i), or the like. The pixel electrode pattern may be formed by a damascene process. The damascene process forms a pattern by forming recesses by etching or a like method, depositing a metal thereon, and polishing the metal to leave the metal in the recess portions only. The polishing is preferably conducted by CMP (chemical mechanical polishing). In this Embodiment, an insulating material exists between the pixel electrodes (1616), and capacitance coupling may occur. This embodiment is more effective in such a case.

### (Embodiment 10)

The above-described Embodiments are effective for transmission type liquid crystal display devices, reflection type liquid crystal display devices, liquid crystal projectors, HMDs (Head Mount Displays), view finders for camcorders.

The pixel transistors and driving circuits therefor can be formed on a single crystal semiconductor substrate. It may be constituted of polysilicon, amorphous silicon, or thin film monocrystalline silicon formed on an insulating substrate. This Embodiment is also effective for combination of the above constitution. For example, a peripheral circuit may be formed on a single crystalline semiconductor substrate, and pixel switches may be formed from a thin film single crystal, polysilicon, or amorphous silicon. This Embodiment is naturally effective for ITO or a like transparent electrode as the pixel electrodes, or a metal reflection electrode. Further, this Embodiment is effective in offsetting the influence of capacitance coupling between adjacent pixel electrodes or between the wirings to adjacent pixel electrodes even in the cases where a multi-layer metal wiring is employed as wiring between the output of pixel and the pixel electrode, and where the pixel electrodes, or the pixel electrodes and wiring layer are flattened. Further, this Embodiment is effective for the devices employing TN (Twisted Nematic) liquid crystals, STN (Super Twisted Nematic) liquid crystals, polymer dispersion type liquid crystals, or DAP (Deformation of Aligned Phase) liquid crystals; devices having an orientation film on or near the surface of pixel electrodes, or devices having a dielectric mirror.

The important point in this Embodiment is to make the capacitance of the pixel larger, in particular in liquid crystal display device of high fineness. Further, reflective type liquid crystal display devices, differently from light-transmission type devices, have generally an advantage that the numerical aperture (effective area) can be made larger without providing a light-intercepting portion. With this type of device, the distance between the pixel electrodes should be minimized effectively within the range of process rule. However, this increases the capacitance coupling between adjacent pixels disadvantageously. This is solved by driving with precharging or construction and operation of the shift register of this Embodiment.

### (Embodiment 11)

A liquid crystal display device is explained which is driven with precharging in pixel electrode array by video signals introduced from the aforementioned video line.

Embodiments of the present invention is further described on plural kinds of liquid crystal panels without limiting the invention thereto. The effects of the present invention can be naturally augmented by combination of the techniques of the Embodiments. The liquid crystal panels described are constructed by use of a semiconductor substrate, but is not limited thereto. The structure may be formed with a usual ordinary light-transmissive substrate as described below. The device of the present invention is not limited to the reflection type liquid crystal display device, but may be a transmission type liquid crystal display device. The liquid crystal panels described below are of the type of MOSFET or TFT, but present invention is applicable also to two-terminal type panels. Further, the liquid crystal panels described below are useful not only for display apparatuses of household television sets, but also for display apparatuses of projectors, head-mounting displays, stereoscopic image game machines, lap-top computers, electronic pocketbooks, television meeting systems, car navigation systems, aircraft instrument panels, and so forth.

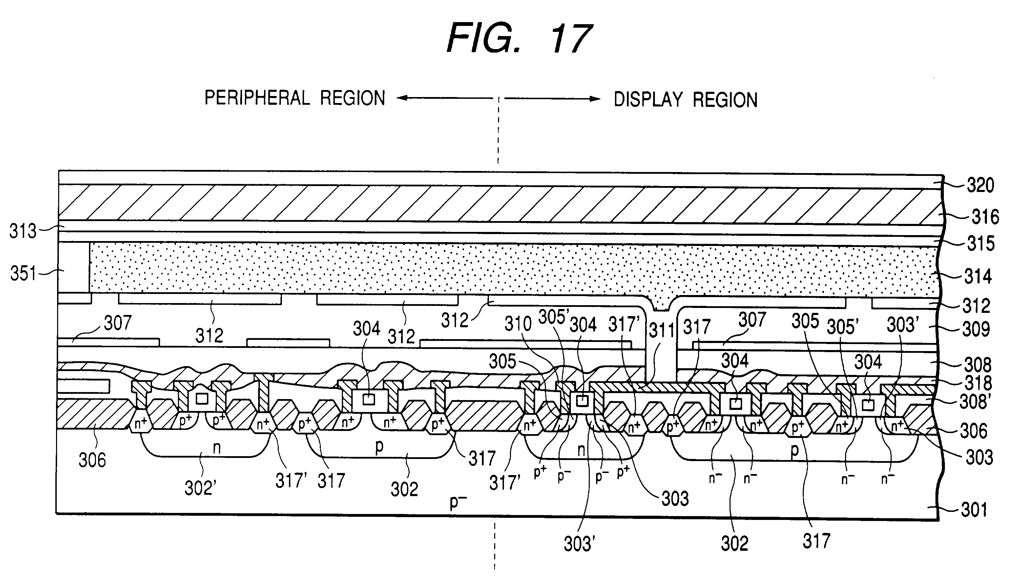

Fig. 17 is a sectional view of a liquid crystal panel of this embodiment. In Fig. 17, the numeral 301 denotes a semiconductor substrate; 302 and 302', a p-type well and an n-type well, respectively; 303, 303', and 303", transistor source regions; 304, gate regions; and 305, 305', and 305", drain regions.

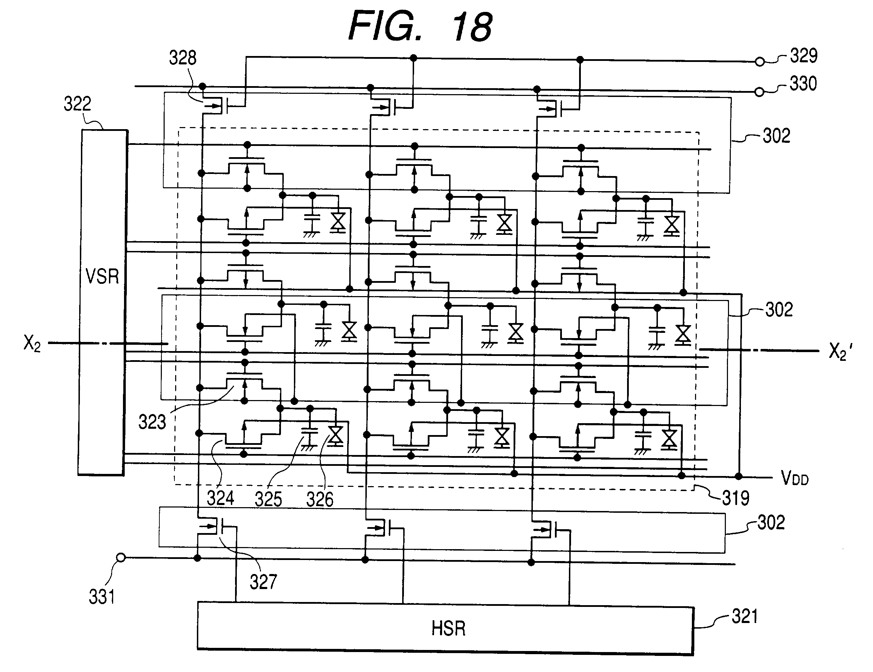

As shown in Fig. 17, a high voltage of 20-35 V is applied to the transistor of the display region, and the source and the drain layers are not self-matchingly formed. Therefore, offsets are provided, and therebetween, a low-concentration n⁻-layer in a p-well and a low-concentration p⁻-layer in an n-well are provided as shown in source region 303' and drain region 305'. The offset ranges preferably from 0.5 to 2.0 µm. Fig. 18 shows a part of the peripheral circuit. At a part of the circuit at the periphery, the source layers and the drain layers are formed by self-matching at the gates.

The offsets of the sources and the drains are described above. The amount of the offset is selected depending on the dielectric strengths. The length of the gate is optimized effectively. A part of the peripheral circuit is a logic circuit, and can be driven by a voltage of 1.5-5 V. Therefore, the above self-matching structure is employed for reduction of the transistor size and for improving the transistor driving power. Substrate 301 is made of a p-type semiconductor. The substrate is kept at the lowest potential (usually at the ground potential). To the n⁻ type well, a pixel voltage of from 20 to 35 V is applied in the display region. To the logic circuit portion of the peripheral circuit, a logic driving voltage of from 1.5 to 5 V is applied. With this structure, an optimized device is constructed corresponding to respective voltages, and thereby the chip size can be decreased, and pixel display can be conducted with high quality at a high speed.

In Fig. 17, the numeral 306 denotes a field oxide film; 310, a source electrode connected to data wiring; 311, a drain electrode connected to a pixel electrode; 312, a pixel electrode serving also as a reflection mirror; and 307, a light-intercepting layer covering the display area, and peripheral region preferably formed from Ti, TiN, W, Mo, or the like. The display region is covered with light-intercepting layer 307 except for the connection portions of pixel electrode 312 and drain electrode 311 as shown in Fig. 17. The peripheral pixel region is covered with light-intercepting layer 307 except for regions of larger wiring capacitance like a part of the video line and the clock line, and when stray light causes malfunction of the circuit at the portion not covered with light-intercepting layer 307, the layer of the pixel electrodes is covered. Insulating layer 308 is placed under light-intercepting layer 307. Insulating layer 308 is stabilized by flattening the underlying P-SiO layer 318 by SOG and covering it with P-SiO layer 308. Instead of the SOG treatment, the flattening may be conducted by forming a P-TEOS (phosphotetraethoxysilane) film, covering it with P-SiO layer 318, and treating insulating layer 308 by CMP.

Insulating layer 309 is provided between reflective electrode 312 and light-intercepting layer 307. Reflective electrode 312 has charge-holding capacitance by aid of this insulation layer 309. For a larger capacitance, insulation layer 309 is effectively made from highly dielectric P-SiN, Ta₂O₅, or a lamination film with SiO₂, in place of simple SiO₂. Insulation layer 309 is preferably formed on a flat face of a metal such as Ti, TiN, Mo, and W of light-intercepting layer 307 in a layer thickness ranging from about 500 to about 5000 Å.

The numeral 313 denotes an anti-reflection film; 314, a liquid crystal material; 315, a common light-transmissive electrode; 316, a counter substrate; 317 and 317', high-impurity concentration regions; and 319, a display region; and 320, an anti-reflection film.

As shown in Fig. 17, high-impurity concentration layers 317, 317' having the same polarity as the wells 302, 302' under the lower portion of the transistor are formed at the periphery and the interior of the wells 302, 302'. The well potential is fixed stably at a desired potential by the low-resistance layer even when signals of high amplitude is applied to the source, thereby realizing high-quality picture display. Between n-type well 302' and p-type well 302, the aforementioned p⁺ type and n⁺ type high-impurity concentration layers are provided with interposition of a field oxide film, which makes unnecessary the channel-stop layer usually provided for MOS transistors.

These p⁺ type and n⁺ type of high-impurity concentration layers 317, 317' can be produced simultaneously in the process of formation of the source layer and the drain layer, so that the number of kinds of masks and the number of the production steps are decreased to lower the production cost.

Anti-reflection layer 313 is provided between a common light-transmissive electrode 315 and counter substrate 316, and is designed to reduce interfacial reflection in consideration of the refraction index of the liquid crystal at the interface. The insulation film has preferably a refraction index lower than the refraction indexes of counter substrate 316 and light-transmissive electrode 315.

Fig. 18 is a circuit diagram of this embodiment. In Fig. 18, the numeral 321 denotes a horizontal shift register; 322, a vertical shift register (VSR); 323, an n-channel MOSFET; 324, a p-channel MOSFET; 325, a capacitor; 326, a liquid crystal layer; 327, a signal transfer switch; 328, a reset switch; 329, a reset pulse input terminal; 330, a reset power source terminal; and 331, an input terminal for picture signals. Semiconductor substrate 301 may be of an n-type, although it is of p-type in Fig. 18.

Well region 302' is of a conductive type opposite to semiconductor substrate 301. Therefor, well region 302 is of p-type in Fig. 18. p-type well region 302 and n-type well region 302' contains preferably an impurity implanted at a concentration higher than that of semiconductor substrate 301: for the impurity concentration of semiconductor substrate ranging from 10¹⁴ to 10¹⁵ (cm⁻³), the impurity concentration in well region 302 preferably ranges from 10¹⁵ to 10¹⁷ (cm⁻³).

In Fig. 17, source electrode 310 is connected to a data wiring for transferring display signal, and drain electrode 311 is connected to picture electrode 312. These electrodes 310, 311 are formed usually from the material Al, AlSi, AlSiCu, AlGeCu, or AlCu. The contact can be stabilized and contact resistance can be reduced by providing a bia metal layer composed of Ti and TiN on the contact interface between the bottoms of electrodes 310, 311 and the semiconductor. The wiring described in Embodiments 1 and 2 are naturally designed so as not to cause drive delay between the pixels. The pixel electrode 312 has preferably a flat surface and is highly reflective. The material includes Cr, Au, Ag, and the like in addition to usual wiring metals of Al, AlSi, AlSiCu, AlGeCu, and AlC. For improvement of flatness, the surfaces of underlying insulation layer 309 and pixel electrode 312 are treated for chemical mechanical polishing (CMP)

In Fig. 18, capacitance 325 serves to hold signals between pixel electrode 312 and common light-transmissive electrode 315. To well region 302, the substrate potential is applied. In this embodiment, the transfer gates on the respective lines are constituted such that the ones of the first line from the top have n-channel MOSFET 323 at the upper side and p-channel MOSFET 324 at the lower side, and the ones of the second line from the top have p-channel MOSFET 323 at the upper side and n-channel MOSFET 324 at the lower side, the arrangement being changed alternately. As described above, the stripe type well contacts with power source line at the periphery of the display region, and further fine power source line is provided in the display region for the contact.

The most important point therefor is the stabilization of the well resistance. Therefore, for a p-type substrate, the contact area or the number of the contact points in n-well is made larger than that in the p-well in the display region. The p-well is kept at a prescribed potential by the p-type substrate, and the substrate serves as a low resistance article. Thereby, it is liable to be influenced greatly by swing caused by input or output of signals to or from source and drains of n-well in an island state. The influence can be prevented by strengthening the contact with the upper wiring layer.

The image signals (e.g., video signals, pulse-modulated digital signals, etc.) are inputted from image signal input terminal 331 and outputted to respective data wirings by turning on or off signal transfer switches 327 in correspondence with the pulses from horizontal shift register 321. Vertical shift register 322 applies high pulse to the gate of n-channel MOSFET 323, and low pulse to the gate of p-channel MOSFET on the selected line.

As described above, the switch in the pixel portion is constituted of monocrystalline CMOS transfer gate, and the signals from the source can be written fully into the pixel electrode, independently of the threshold value of the MOSFET, advantageously.

The switch is constructed from a monocrystalline transistor, and realizes high speed driving with high reliability without variation and without causing instable behavior in the crystal grain interface of poly-Si-TFT.

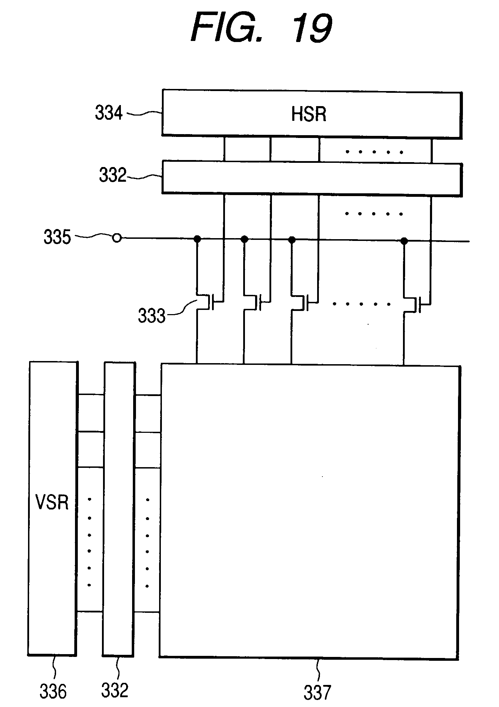

The constitution of the panel peripheral circuit is explained by reference to Fig. 19. In Fig. 19, the numeral 337 denotes a display region of the liquid crystal elements; 332, a level shifter circuit; 333, a video signal sampling switch; 334, a horizontal shift register; 335, a video signal input terminal; and 336, a vertical shift register.

The horizontal SR 334, and vertical SR 336 are capable of scanning in either scanning directions under control by the selection switch, and can meet changes of arrangement of optical systems or the like without change of the panel. Therefore, the same panel can be used for different series of products to lower the production cost advantageously. In Fig. 19, video signal sampling switch 333 has a constitution of one transistor of a single side polarity, but is not limited thereto naturally, and may be of a CMOS transmission gate constitution to write inputted video line into all of the signal lines. High quality of image can be achieved by using, for this portion, the circuit constitution (layout) of Embodiments 1 to 10.

The CMOS transmission gate constitution involves the problem of swing of video signal owing to difference in gate areas between the nMOS gate and the pMOS gate or difference in overlapping capacitance between the gate and the source-drain. The swing can be prevented by connecting, to respective signal lines, a source and a drain of MOSFET of gate quantity of about half of the gate quantity of MOSFET of polar sampling switch at a reversed phase pulse. Thereby, video signals are written in precisely into signal lines, and the quality of display can be made higher.

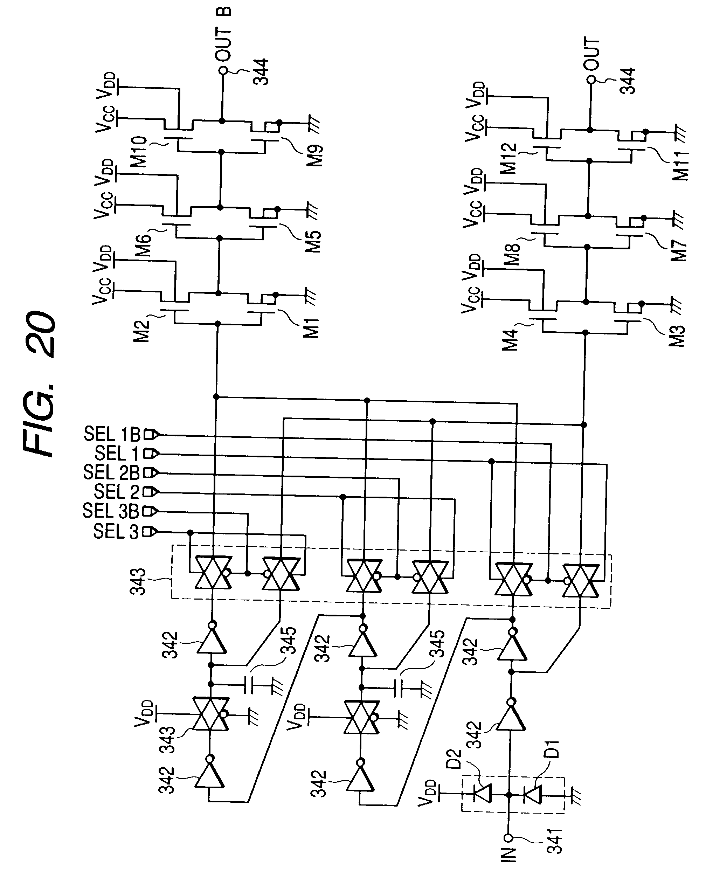

Next, the method for synchronizing video signals precisely with the sampling pulse is explained by reference to Fig. 20. For the synchronization, the quantity of the delay of sampling pulse should be changed. In Fig. 20, the numeral 342 denotes an inverter for delaying the pulse; 343, a switch for selecting the inverter for delaying; 344, output with the controlled delay; 345, a capacitor; M1 to M11, drivers of CMOS constitution; "out B", output in the reverse phase to the input; "out", in-phase output; and 346, a protection circuit.

The number of the inverters 342 to be passed for the delay is selected by combination of from SEL1 (SEL1B) to SEL3 (SEL3B).

The synchronization circuit in the panel adjusts, by use of the above selection switch, any disturbance of the symmetry of the quantity of delay of pulse from outside of the panel of R, G, and B caused by jigs or the like to give excellent picture display without positional deviation at the high phase region of R, G, and B. Further, a temperature measurement diode may be incorporated in the panel to correct the delay for temperature by reference to the table.

The liquid crystal material is explained below. In Fig. 17, the device has a flat opposed substrate structure. Common electrode substrate 316 has a rough surface to prevent the interfacial reflection by common light-transmissive electrode 315, and common light-transmissive electrode 315 is provided on the rough surface. On the reverse side of common electrode substrate 316, anti-reflection film 320 is provided. The roughening of the surface may be conducted by polishing with fine abrasive grains, and is effective for increase of the contrast.

The liquid crystal material is polymer-network liquid crystal PNLC. Instead, PDLC (Polymer Dispersed Liquid Crystal) may be used. The polymer-network liquid crystal PNLC can be prepared according to a phase separation polymerization method. In this method, a liquid crystal material, and a polymerizable monomer or oligomer are dissolved in a solvent, the solution is introduced into a cell, polymerization is caused by UV to separate the polymer phase from the liquid crystal phase to form a polymer network in the liquid crystal. The PNLC contains the liquid crystal at a higher content (70-90% by weight).

In use of PNLC, a nematic liquid crystal having a high anisotropy (Δn) of the refractive index does not give strong light scattering, while a nematic liquid crystal having a high anisotropy (Δε) of the dielectric constant enables driving at a low voltage. The light scattering for achieving high contrast can be obtained with a network of center-to-center distance of 1-1.5 µm.

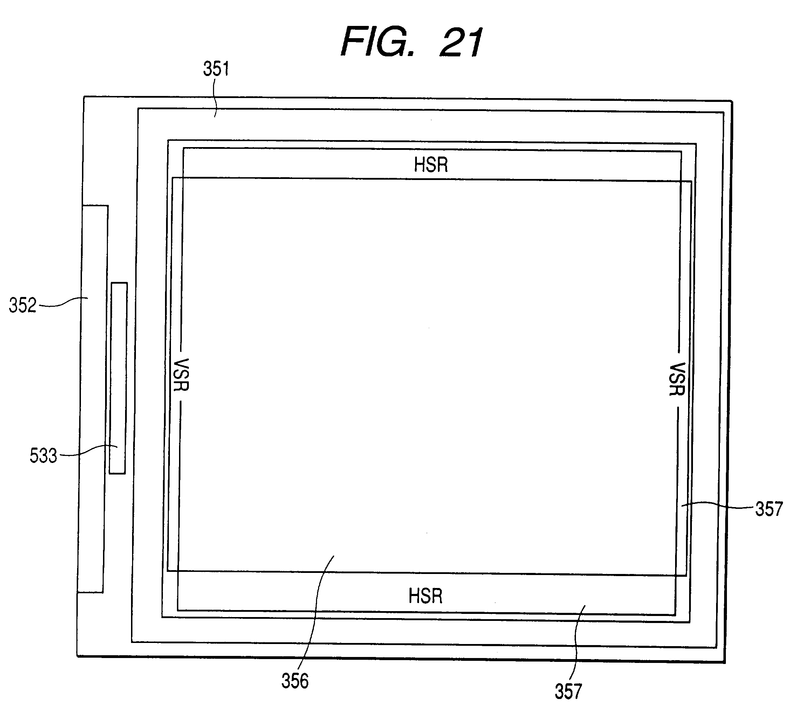

The seal structure and the panel structure is explained below by reference to Fig. 21. In Fig. 21, the numeral 351 denotes a seal portion; 352, an electrode pad; and 353, a clock buffer circuit. The panel is connected to an amplifier not shown in the drawing. This amplifier is used in the electric inspection of the panel as an output amplifier. The panel has an Ag paste portion not shown in the drawing for application of the potential to the counter substrate. The numeral 356 denotes a display portion employing the liquid crystal elements. The numeral 357 denotes peripheral circuit portion including a horizontal shift register (HSR) and vertical shift register (VSR). The seal portion 351 is provided at the periphery of display portion 356, and the semiconductor substrate 301 having picture image electrode 312 and a glass substrate having common electrode 315 are bonded by application of a contact bonding agent or an adhesive. After the bonding at seal portion 351, the liquid crystal is enclosed and sealed in display portion 356 and shift register portion 357.

In this embodiment as shown in Fig. 21, the circuits are provided inside and outside the seal so that the total chip size is made smaller. In this panel, the lead-out pads are gathered to one side of the panel. However, the leading-out may be conducted at the both long sides or any plural sides for handling of a high-speed clock.

In this embodiment, the panel employs a semiconductor substrate such as an Si substrate. This substrate may possibly cause malfunction by variation of the substrate potential, if the panel is exposed to strong light like a projector light and the light is introduced to the side wall of the substrate. Therefore, the side walls of the panel, and the peripheral circuit portion of the display region on the upper face of the panel are made to serve as a light-intercepting substrate holder. The back face of the Si substrate is bonded to highly thermoconductive metal like Cu with interposition of a highly thermoconductive adhesive.

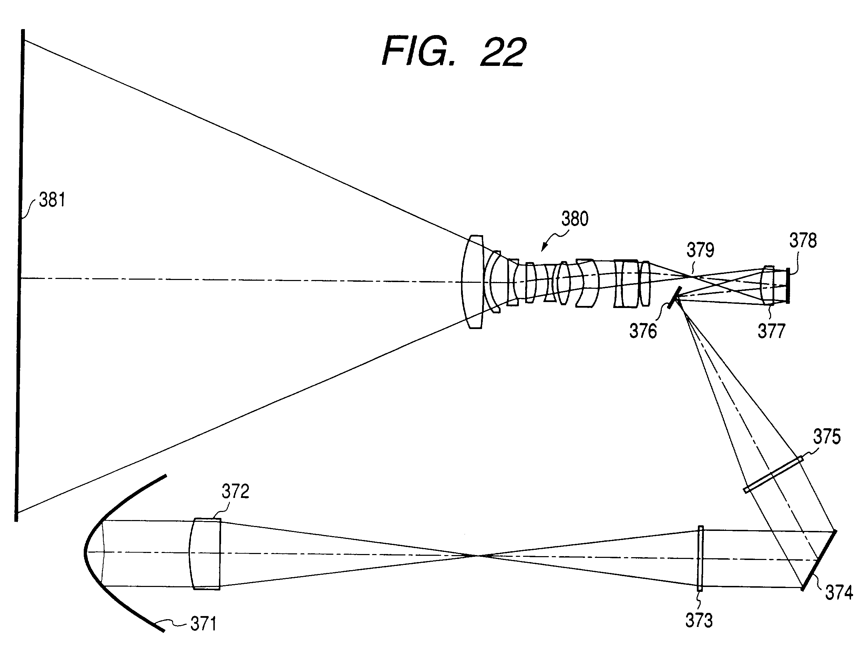

The optical system incorporating the reflective type liquid crystal panel of this embodiment is explained by reference to Fig. 22. In Fig. 22, the numeral 371 denotes a light source such as a halogen lamp; 372, a condenser lens for focusing the light source image; 373 and 375 are respectively a planar convex Fresnel lens; 374, a color separating optical element for separating the light into R, G, and B such as dichroic mirror, and diffraction grating; 376, a mirror for introducing the separated light of R, G, and B respectively to three panels of R, G, and B; 377, a field lens for introducing the condensed beam as parallel ray to the reflective liquid crystal panel; 378, the aforementioned reflection type liquid crystal elements for R, G, and B; 379, the position of a diaphragm; 380, a projection lens system for projecting an enlarged picture; and 381, a screen. Clear bright picture image can be obtained at high contrast by use of a two-lens combination of a Fresnel lens for converting the projected light into parallel light, and a lenticule for displaying in a wide up-down and right-left angle. In Fig. 22, a one-color panel only is shown. However, the light is separated into three colors between color-separation optical element 374 to diaphragm portion 379, and three panels are employed. Otherwise, naturally, a single panel constitution can be employed by providing a microlens array on the surface of a panel of a reflection type liquid crystal to introduce different incident light to different pixel region. The light reflected regularly at the respective pixels on application of a voltage to the liquid crystal layer is projected through diaphragm portion 379 onto the screen.

On the other hand, when the liquid crystal layer is in an irregular state in the absence of the voltage application, the light introduced to the reflection type liquid crystal element is scattered in every direction, and only the scattered light directed to the aperture of the diaphragm portion 379 is introduced to the projection lens to display a black color. Thus the above optical system does not require a polarization plate, and signal light from all the pixel electrode is introduced to the projection lens at a high reflection ratio. Therefore, the display can be obtained at a brightness higher than conventional ones by a factor of 2 to 3. As described for the above embodiment, the surface of the counter substrate, and the interface are treated for anti-reflection, and noise light component is extremely less, thereby high contrast display can be realized. Further, since the panel size can be made smaller, all the optical elements (lenses, mirrors, etc.) can be miniaturized to lower the production cost and to decrease the product weight.

The irregularity in color and brightness of the light source can be offset on the screen by inserting an integrator (fly-eye lens type, or rod type) between the light source and the optical system.

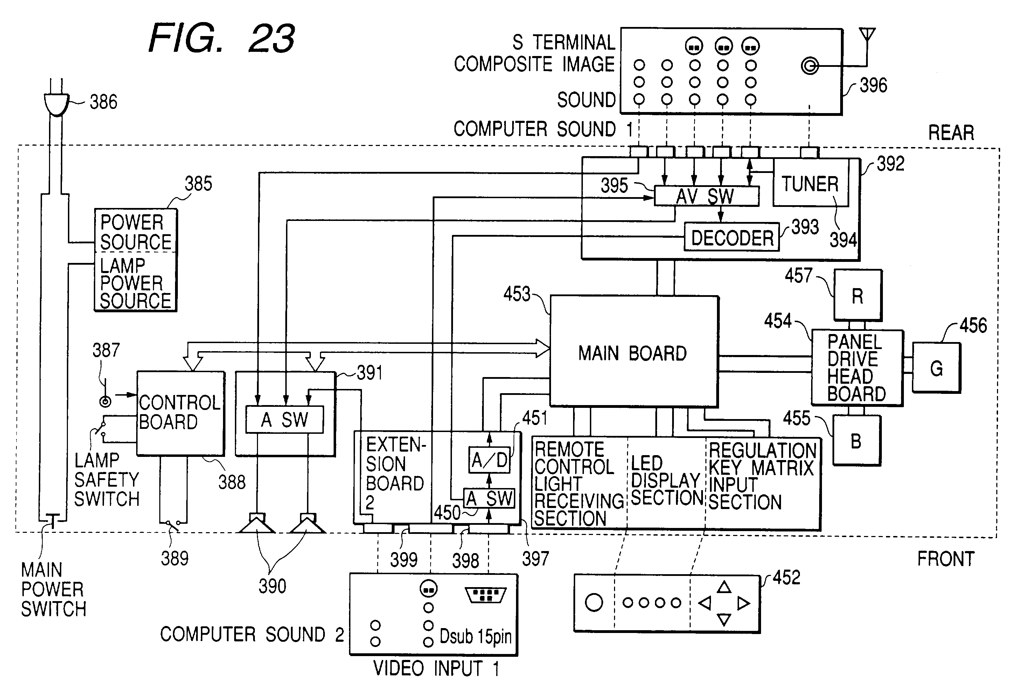

The peripheral electric circuit other than the above-mentioned liquid crystal panel is explained by reference to Fig. 23. In Fig. 23, the numeral 385 denotes a power source which is divided into a power source for lamps and a power source for signal processing circuit driving system; 386, a plug; and 387, a lamp temperature detector. The lamp temperature detector controls the lamp through a control board 388, for example, to stop the lamp at an abnormal lamp temperature. The numeral 389 denotes a filter safety switch for controlling the system. For example, it keeps the high-temperature lamp house box closed even when the box is tried to open. The numeral 390 denotes a speaker; 391, a voice board which may incorporate a processor of 3D sound, surround sound, or the like; and 392, an extension board 1. Extension board 1 has an S-terminal for video signals, input terminals from external apparatus 396 for composite images or voices, selection switch 395 for selecting the signals, and tuner 394. Signals are transferred through a decoder 393 to extension board 2. Extension board 2 has a Dsub 15-pin terminal for a video apparatus or a computer to receive signals from another system, and the signals are converted to digital signals by A/D converter 451 through a changeover switch 450 for changing to video signals from decoder 393.

The numeral 453 denotes a main board chiefly constituted of a memory like video RAM, and CPU. NTSC signals after A/D conversion by A/D converter 451 is stored once in the memory, and are treated for preparation of interpolation signals for vacant element not matching with the liquid crystal element number, for γ-conversion edge gradation adjustment, bright adjustment, bias adjustment, or other signal treatment. Computer signals other than NTSC signals can be treated for resolution conversion for example, VGA signals of a high resolution XGA panel. Main board 453 is capable also of synthesizing NTSC signals of plural picture data with computer signals. The output of main board 453 is treated for serial/parallel conversion, and is introduced in less noise-affectable state to head board 454. In head board 454, parallel/serial conversion, and D/A conversion are conducted, and the signals are divided corresponding to the number of the video lines of the panel, and written through a drive amplifier into liquid crystal panels of B, G, R colors 455, 456, 457. The numeral 452 denotes a remote control panel to operate the computer screen in a simple manner as television. The respective liquid crystal devices 455, 456, 457 have the same constitution and have a color filter for respective colors, and as the horizontal/vertical scanning circuits, any of the ones described in Embodiments 1 to 10 may be employed. The liquid crystal devices as described above are capable of treating picture image of not high resolution into high-quality picture images to give fine picture display.

### (Embodiment 12)

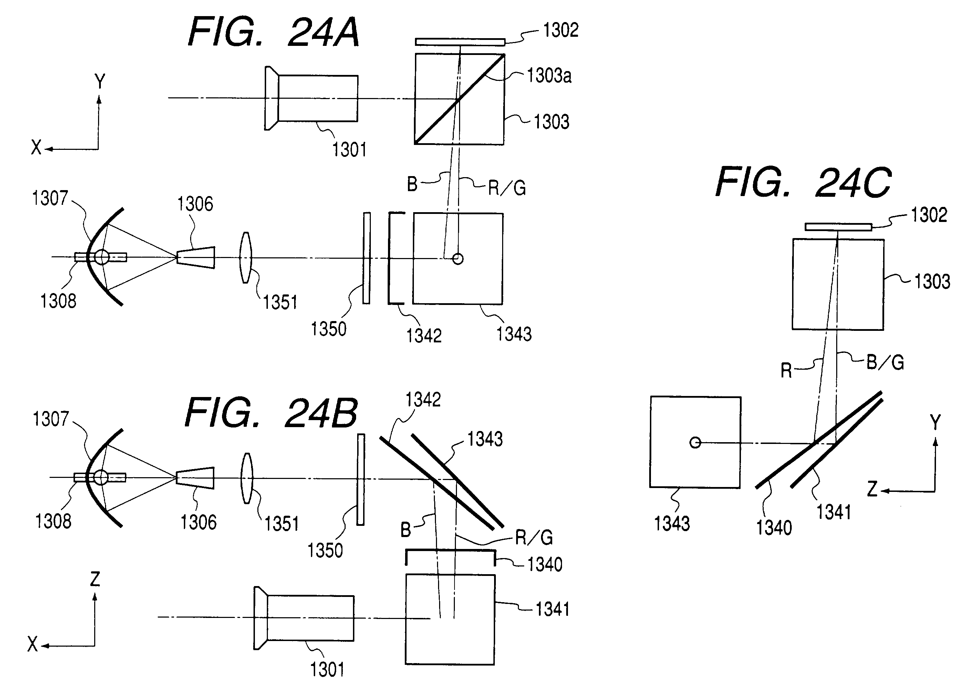

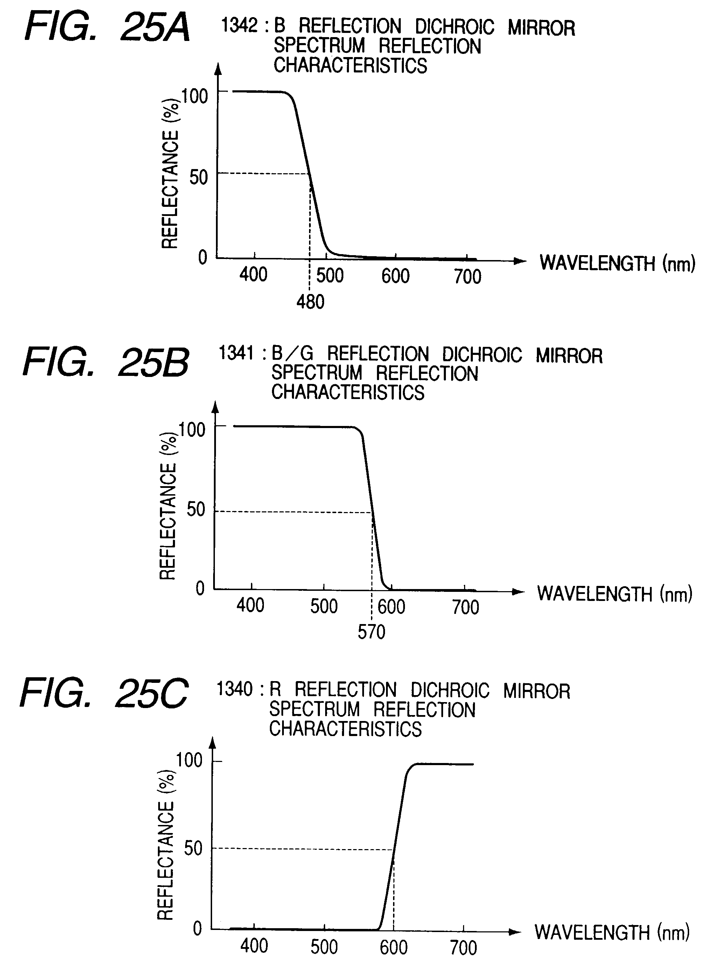

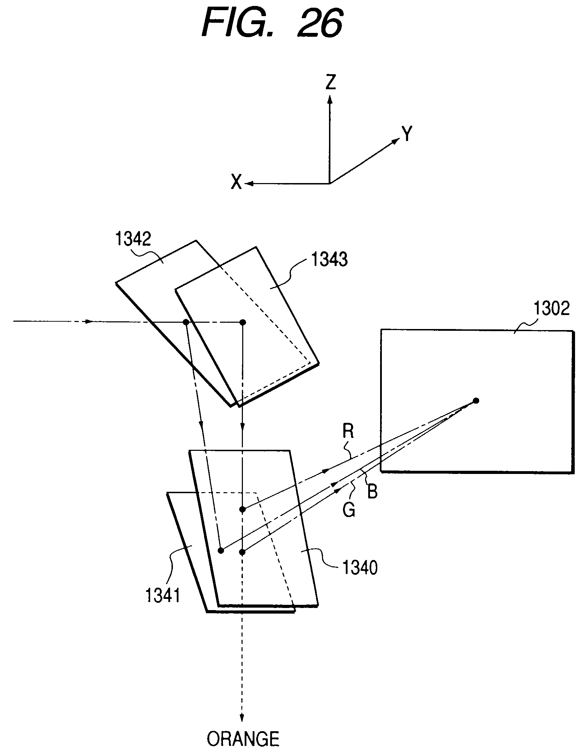

Figs. 24A, 24B and 24C show roughly the principal portion of the optical system of a projection type liquid crystal display apparatus employing the display panel of the above patent application. Fig. 24A is the plan view, Fig. 24B is the front view, and Fig. 24C is the side view. In Figs. 24A to 24C, the numeral 1301 denotes a projection lens for image projection to a screen; 1302, a liquid crystal panel having microlenses; 1303, a polarized light beam splitter (PBS); 1340, an R(red light)-reflecting dichroic mirror; 1341, a B/G(blue and Green light)-reflecting dichroic mirror; 1342, a B(blue light)-reflecting dichroic mirror; 1343, a high-reflectance mirror for reflecting all colors; 1350, a Fresnel lens; 1351, a convex lens; 1306, a rod type integrator; 1307, an ellipsoidal reflector; and 1308, an arc lamp of metal halide, UHP, or the like. R(red light)-reflecting dichroic mirror 1340, B/G(blue and green light)-reflecting dichroic mirror 1341, and B(blue light)-reflecting dichroic mirror 1342 have spectral reflection characteristics respectively as shown in Figs. 25A, 25B, and 25C. These dichroic mirrors together with high-reflectance mirror 1343 are arranged three-dimensionally as shown the perspective view of Fig. 26. The mirrors separate white illumination light into three colors of R, G, and B and serve to illuminate liquid crystal panel 1302 by the respective colors from three-dimensionally different directions.

The description is made in accordance with the traveling course of the light flux. The white light emitted for lamp 1308 is focused on inlet of integrator 1306 by ellipsoidal reflector 1307. The light flux is made uniform in spacial intensity distribution during traveling through integrator 1306 with repeated reflection therein. The light flux emitted from integrator 1306 is changed to a parallel flux in the x-axis direction (in Fig. 24B) by convex lens 1351 and Fresnel lens 1350, and reaches B-reflecting dichroic mirror 1342. At B-reflecting mirror 1342, B light (blue light) only is reflected downward (in Fig. 26B) in the z-axis direction at a prescribed angle to the z-axis toward R-reflecting dichroic mirror 1340. The colored light (R/G light) other than the B light passes through B-reflecting dichroic mirror 1342, and is reflected by high-reflectance mirror 1343 at a right angle in the z-axis direction (downward) toward R-reflecting dichroic mirror 1340. B-Reflecting dichroic mirror 1342 and high-reflectance mirror 1343, in Fig. 25A, are both placed so as to reflect the light flux from integrator 1306 in the z-axis direction (downward). High-reflectance mirror 1343 is tilted with a turning axis of the y-axis direction at a tilting angle of just 45° relative to the x-y plane. B-Reflecting mirror 1342 is also tilted with a turning axis of the y-axis direction at a tilting angle of less than 45° relative to the x-y plane. Thereby, the R/G light is reflected by high-reflectance mirror 1343 in the z-axis direction, whereas the B light is reflected by B-reflecting dichroic mirror 1342 downward at a prescribed angle to the z-axis (tilted in the x-z plane). In order to make coincident the illumination areas of B light and R/G light on liquid crystal panel 1302, the degrees of the shift and tilt of high-reflectance mirror 1343 and B-reflecting dichroic mirror 1342 are adjusted such that the main rays of the respective colors intersect at liquid crystal panel 1302.

The R/G/B light directed downward (in z-axis direction) as mentioned above travels toward R-reflecting dichroic mirror 1340 and B/G-reflecting dichroic mirror 1341 which are placed below B-reflecting dichroic mirror 1342 and high-reflectance mirror 1343. B/G-reflecting dichroic mirror 1341 is tilted with a tilting axis in the x-axis direction at a tilting angle of just 45° relative to the x-y plane. R-Reflecting mirror 1340 is also tilted with a tilting axis in the x-axis direction at a tilting angle of less than 45° relative to the x-z plane. Thereby, of the introduced R/G/B light, the B/G light passes through R-reflecting dichroic mirror 1340, being reflected by B/G-reflecting dichroic mirror 1341 at a right angle in y-axis positive direction, being polarized by PBS 1303, and illuminating liquid crystal panel 1302 placed horizontally in the x-z plane. Of the introduced R/G/B light, the B light, which is traveling as mentioned above (see Fig. 24A and Fig. 24B) at a prescribed angle relative to the x axis (tilted in the x-z plane), is reflected by B/G reflection dichroic mirror 1341, and illuminates liquid crystal panel 1302 at a prescribed angle relative to the y-axis (tilted in the x-y plane).

The G light is reflected by B/G dichroic mirror 1341 at a right angle in the y-axis positive direction, being polarized by PBS 1303, and illuminating liquid crystal panel 1302 perpendicularly, namely at an incident angle of 0°. The R light is reflected by R-reflecting dichroic mirror 1340 placed before B/G-reflecting dichroic mirror 1341 in a y-axis positive direction, traveling the y-axis positive direction at a prescribed angle relative to the y-axis (tilted in the x-y plane) as shown in Fig. 24C (side view), being polarized by passing through PBS 1303, and illuminating liquid crystal panel 1302 at an incident angle (in the y-z plane direction) of the above prescribed angle to the y-axis. In order to make coincident the illumination areas of colors of R, G, and B on liquid crystal panel 1302, the degrees of the shift and tilt of B/G-reflecting dichroic mirror 1341 and R-reflecting dichroic mirror 1340 are adjusted, similarly as above, such that the main rays of the respective colors intersect at liquid crystal panel 1302. The cutoff wavelength of B-reflecting dichroic mirror 1341 is 480 nm as shown in Fig. 25A, that of B/G-reflecting dichroic mirror 1341 is 570 nm as shown in Fig. 25B, and that of R-reflecting dichroic mirror 1340 is 600 nm as shown in Fig. 25C. Therefore, unnecessary orange light passes through B/G-reflecting dichroic mirror 1341, and is led to the outside of the optical path to obtain optimum color balance.

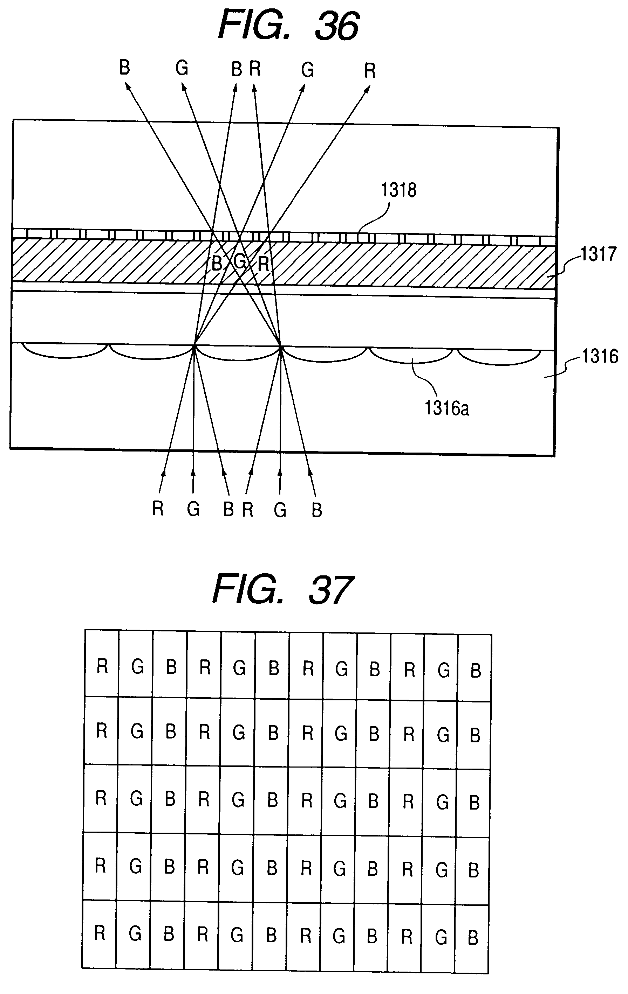

As described later, the light of R, G, and B are respectively reflected and polarization-modulated, introduced again to PBS 1303, reflected at PBS face 1303a of PBS 1303 in the x-axis positive direction. The light flux forming the image is introduced to projection lens 1301, and is enlarged and projected onto a screen (not shown in the drawing). The light fluxes of R, G, and B are introduced respectively at different incident angles to liquid crystal panel 1302, and therefore are reflected at different reflection angles. Accordingly, the projection lens 1301 used has a sufficient diameter and a sufficient aperture to receive all of the light fluxes. Incidentally, the tilting angles of the light fluxes introduced to projection lens 1301 are paralleled by passing forward and backward through the microlenses to retain the tilting of the incident angles to liquid crystal panel 1302. On the other hand, in a conventional transmission type liquid crystal panel LP, as shown in Fig. 36, the light flux emitted from liquid crystal panel diverges greatly, coupled with condensing action of microlenses, so that a large projection lens having a larger numerical aperture is required to receive the light fluxes, resulting in expensiveness of the lens. However, in this Embodiment, the light flux from liquid crystal panel 1302 diverges relatively less, whereby sufficiently bright image can be obtained on a screen with a smaller numerical aperture of the projection lens of a low cost. Further, this Embodiment can be applied to a stripe type of display system as shown in Fig. 37 where the same color is arranged in vertical lines. However, such a display system is not suitable for a liquid crystal panel employing a microlens as described later.

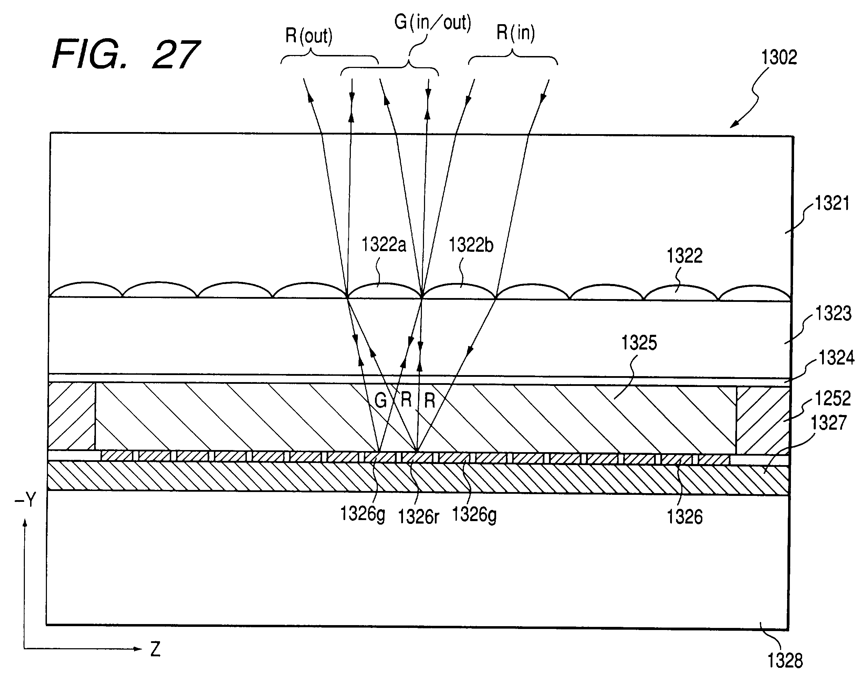

Liquid crystal panel 1302 employed in this Embodiment is explained below. Fig. 27 is a schematic enlarged sectional view of liquid crystal panel 1302 (corresponding to the y-z plane in Fig. 26). In Fig. 27, the numeral 1321 denotes a microlens substrate (glass substrate); 1322, a microlens; 1323, a sheet glass; 1324, a light-transmissive counter electrode; 1325, a liquid crystal layer; 1326, a pixel electrode; 1327, an active matrix driving circuit; 1328, a silicon semiconductor substrate; and 1252, a threshold portion. Microlenses 1322 are formed by an ion-exchange method on the surface of glass substrate (alkali type glass) 1321, and are arranged two-dimensionally at a pitch twice as large as that of pixel electrodes 26 to form a two-dimensional array.

Liquid crystal layer 1325 employs ECB mode nematic liquid crystal such as DAP, and HAN suitable for the reflection type, and the prescribed alignment is maintained by alignment layer not shown in the drawing. In this Embodiment, since the voltage is lower than that in Embodiment 4 and the accuracy of the potential of pixel electrode 1326 is more important, the circuit and the constitution of this Embodiment are effective. In the constitution of single plate with a large number of pixels and a large number of video lines, the constitutions of Embodiments 1 to 10 are highly effective. Pixel electrodes 1326 are formed from aluminum, and simultaneously serves as reflection mirrors. Therefore, pixel electrodes 1326 are treated for the aforementioned CMP at the final stage after patterning to improve the flatness and the reflectivity of the surface (described later in detail).

Active matrix driving circuit 1327 is a semiconductor circuit provided on silicon semiconductor substrate 1328 to drive the above pixel electrodes 1326 as active matrix. In the periphery of the circuit matrix, a gate line driver (vertical register, or the like) and a signal drivers (horizontal register, or the like are provided (described later in detail). The peripheral drivers and the active matrix driving circuit is constituted to write image signals of primary colors of R, G, and B into the pixels of R, G, and B. Although the pixel electrodes 1326 do not have a color filter, they are distinguished as R, G, and B pixels by the primary color picture signals written in the above active matrix driving circuit, and constitute the R, G, and B pixel arrangement described later.

G light of the illumination light to be directed to liquid crystal panel 2 is firstly explained. As described above, the G light is polarized by PBS 1303, and then introduced perpendicularly to liquid crystal panel 1302. One of the light rays introduced to one microlens 1322a, as an example, is shown by the arrow mark G (in/out) in Fig. 27. As shown in Fig. 27, the G ray is focused by microlens 1322 and introduced to G pixel electrode 1326g composed of Al, and is reflected and emitted therefrom through the same microlens 1322a out of the panel. By passing forward and backward through liquid crystal layer 1325, the G ray (polarized) is modulated by the liquid crystal under the action of the electric field formed by signal voltage applied to the pixel electrode 1326g between pixel electrode 1326g and counter electrode 1324, and emitted from liquid crystal panel to return to PBS 1303.

The quantity of light reflected by PBS face 1303a and directed to projection lens 1301 depends on the degree of the modulation to cause dense and light gradation of display of the pixels. On the other hand, R light introduced in an oblique direction within the cross-section (y-z plane) in the drawing is also polarized by PBS 1303, and then, for example, the R ray introduced to microlens 1322b is focused thereby to illuminate R pixel electrode 1326r displaced from the position directly below microlens 1322b as shown by the arrow mark R(in). The R light is reflected by pixel electrode 1326r to be emitted out of the panel through adjacent microlens 1322a (adjacent at -z direction) as shown by the arrow mark R(out).

The R ray (polarized) is also modulated by the liquid crystal under the action of the electric field formed by signal voltage applied between pixel electrode 1326r and counter electrode 1324, and emitted from the liquid crystal panel to return to PBS 1303. Thereafter, the R light is projected by projection lens 1 as a part of the picture image light in the same process as the above G light. In Fig. 27, the G light on G pixel electrode 1326g and the R light on R pixel electrode 1326r seem to overlap and interfere each other. However, this apparent overlapping is due to the schematically magnified thickness of liquid crystal layer. Practically, the thickness of liquid crystal layer is in the range from 1 to 5 µ, which is very thin in comparison with thickness of sheet glass 1323 of 50 to 100 p. Therefore, such light interference does not occur regardless of the pixel size.

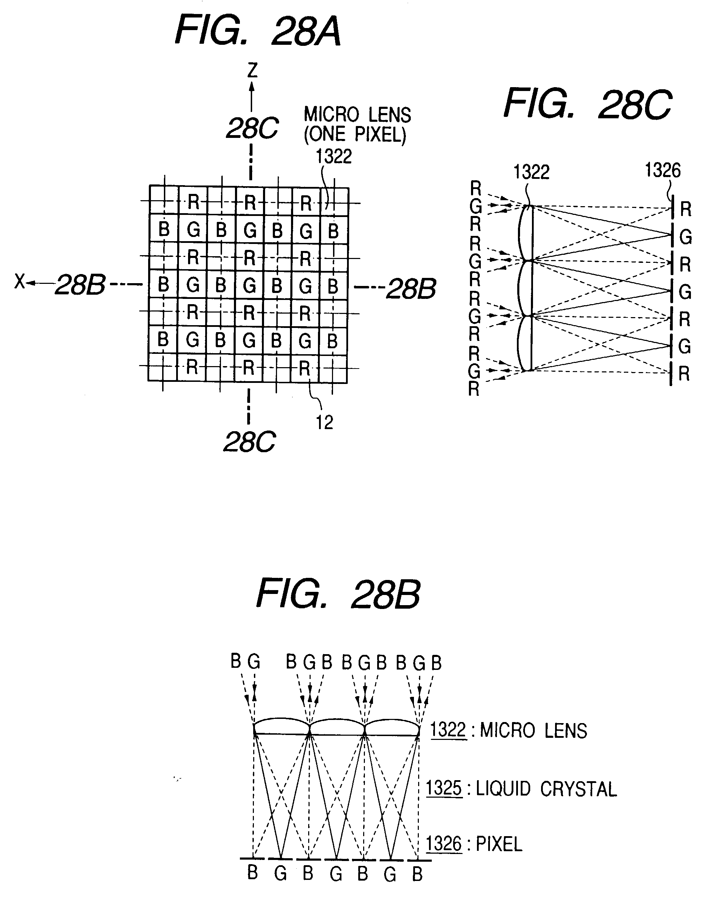

Figs. 28A, 28B and 28C are diagrams for explaining principle of color decomposition and color synthesis in this embodiment. Fig. 28A is a schematic plan view of liquid crystal panel 1302. Fig. 28B and Fig. 28C are respectively a schematic sectional view taken along line 28B - 28B (direction x) and along line 28C - 28C (direction z) of the schematic plan view in Fig. 28A. One microlens 1322 corresponds to a G pixel at the center and halves of adjacent two color pixels as shown by chain lines in Fig. 28A. Fig. 28C corresponds to Fig. 27 showing a y-z section, and shows the states of introduction and emission of the G light and the R light to and from respective microlenses 22. As shown in the drawing, the respective G pixel electrodes are placed directly below the center of the respective microlenses, and the respective R pixel electrodes are placed directly below the boundaries between the respective microlenses. Therefore, the incident angle of the R light is preferably set such that the tan θ of the incident angle θ is equal to the ratio of the pixel pitch (between B element and R element) to the distance between the microlens and the pixel electrode. Fig. 28B corresponds to the x-y cross-section of liquid crystal panel 1302. In this x-y cross-section, the B pixel electrodes and the G pixel electrodes are placed alternately in the same manner as in Fig. 28C, the respective G pixel electrodes are placed directly below the center of the respective microlenses 22, and the respective B pixel electrodes are placed directly below the boundaries between the respective microlenses.

The B light which illuminates the liquid panel, after polarization by PBS 1303, is introduced obliquely in the cross-section (x-y plane). Therefore, the B light introduced through microlens 1322 is reflected by the B pixel electrode 1326b in the same manner as the R light, and is emitted through the microlens 1322 adjacent in x direction to the microlens 1322 employed for the B light introduction as shown in the drawing. The modulation of B-light by liquid crystal on B pixel electrode 1326b, and projection of B-light from liquid crystal panel are conducted in the same manner as aforementioned G light and R light.

The respective B pixel electrodes 1326b are placed directly below the boundaries between the respective microlenses. Therefore, the incident angle of the B light is preferably selected such that the tan θ of the incident angle θ is equal to the ratio of the pixel pitch (G and B elements) to the distance between the microlens and the pixel electrode. In liquid crystal panel in this embodiment, the pixels of R, G, and B are arranged as RGRGRG.... in z direction, and BGBGBG.... in x direction as described above. Fig. 28A shows the planar arrangement of the pixels. The size of the pixel is approximately half of the size of the microlens both in the vertical direction and in the horizontal direction, and the pitch of the pixels is also half of the pitch of microlens. The G pixel is placed just below the center of the microlens in plan view, the R pixel is placed between the G pixels in z direction below the boundary between the microlenses, and the B pixel is placed between the G pixels in x direction below the boundary between the microlenses. The shape of one microlens unit is rectangular (double the pixel size).

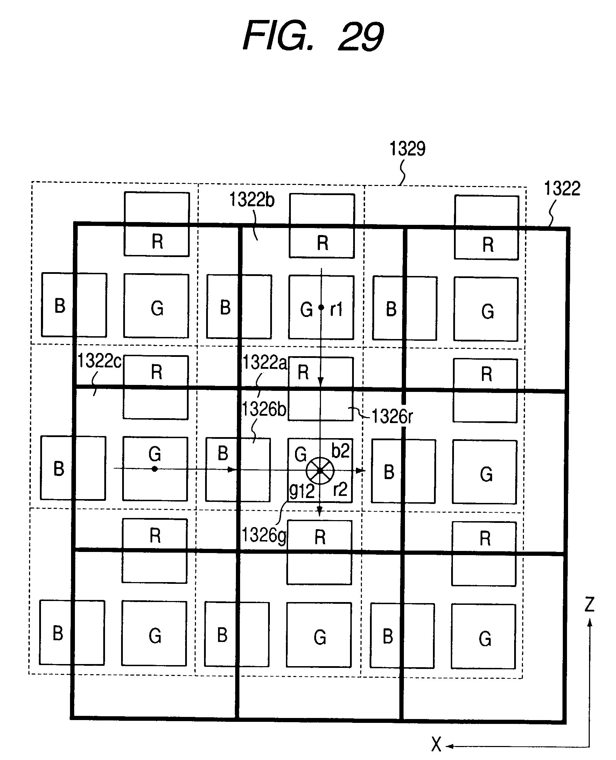

Fig. 29 is a partial enlarged plan view of a part of liquid crystal panel of this embodiment in which one microlens corresponds to three pixels. The dotted lattice line 1329 in the drawing shows groups of pixel units of R, G, and B driven by RGB signals for constituting one image element. In driving the respective R, G, and B pixels by active matrix driving circuit 1327 in Fig. 27, the RGB pixel unit partitioned by the dotted lattice line 1329 is driven by R, G, and B picture signals corresponding to one and the same pixel point. In an image element constituted of R pixel electrode 1326r, G pixel electrode 1326g, and B pixel electrode 1326b, firstly R pixel electrode 1326r is illuminated by R light introduced obliquely through microlens 1322b as shown by arrow mark r1, and reflected R light is emitted through microlens 1322a as shown by arrow mark r2. B pixel electrode 1326b is illuminated by B light introduced obliquely through microlens 1322c as shown by arrow mark bl, and reflected B light is emitted also through microlens 1322a as shown by arrow mark b2 as described before. G pixel electrode 1326g is illuminated by G light introduced perpendicularly (from the front toward the backside of the drawing) through microlens 1322a as shown by arrow mark g12 perpendicular to the drawing, and reflected G light is emitted through the same microlens 1322a perpendicularly (toward the front side of the drawing) as described before.

In such a manner, in liquid crystal panel in this embodiment, in R, G, and B pixel unit constituting one image element, the respective primary color illumination lights are introduced from different illumination position, but are emitted through one and the same microlens (microlens 1322a in this case). This is the same in all other image elements (RGB pixel units).

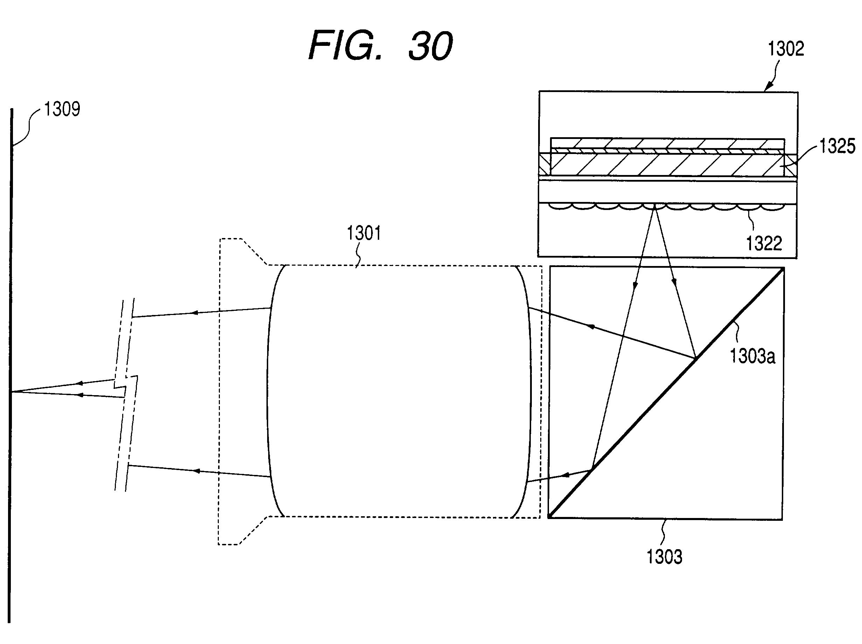

Fig. 30 shows schematically projection of the entire emitted light from liquid crystal panel through PBS 1303 and projection lens 1301 onto screen 1309. The position of the microlenses is adjusted optically to form a projected image on screen 1309. The projected image is constituted of image elements, each image element being in a state of a mixture of color light emitted from RGB pixel units in lattice of microlenses. Thereby a high-quality image can be displayed without an RGB mosaic as shown in Fig. 37 of the prior arts.

Active matrix driving circuit 1327 is provided under respective pixel electrode 1326. Therefore, respective RGB pixels constituting the image element are shown to be arranged in a lateral line in the circuit sectional diagram of Fig. 27. Actually however, the drains of the respective FET are connected to respective RGB pixel electrodes 1326 arranged two-dimensionally as shown in Fig. 17.

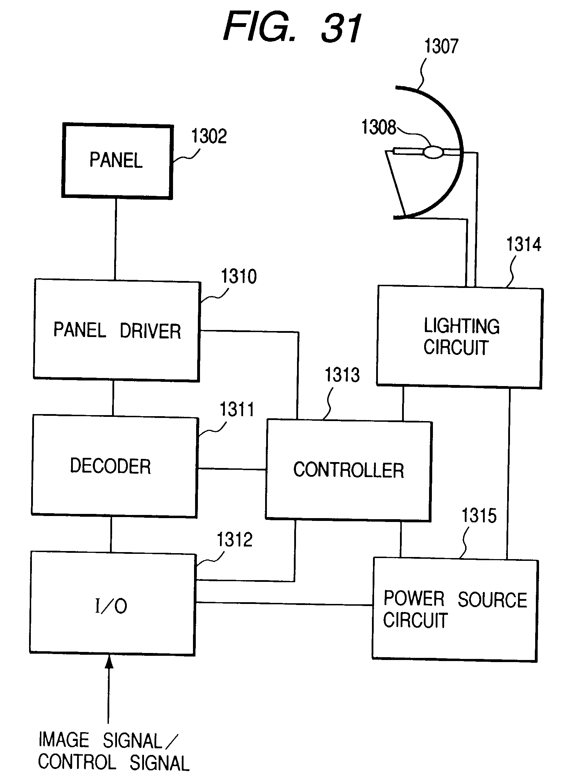

Fig. 31 is a block diagram showing an entire driving circuit system of a projection type display device of this embodiment. In Fig. 31, a panel driver 1310 reverses the polarity of RGB image signals and generates liquid crystal driving signals with a prescribed voltage amplification, and generates also signal for driving counter electrode 1324, and various timing signals. Interface 1312 decodes image signals and control-transfer signals into reference image signals. Decoder 1311 decodes and converts the reference picture signals from interface 1312 into RGB primary color picture signals and synchronization signals. Lighting circuit 1313 as a blast turns on and drives arc lamp 1308 placed in ellipsoidal reflector 1307. Power source circuit 1315 applies electric power to respective circuit blocks. Controller 1313 contains an operation system not shown in the drawing, and controls the above circuit blocks collectively. Thus the projection type liquid crystal display apparatus of this embodiment has ordinary driving circuit as a single plate type projector, and is capable of displaying a high-quality color picture image without RGB mosaic.

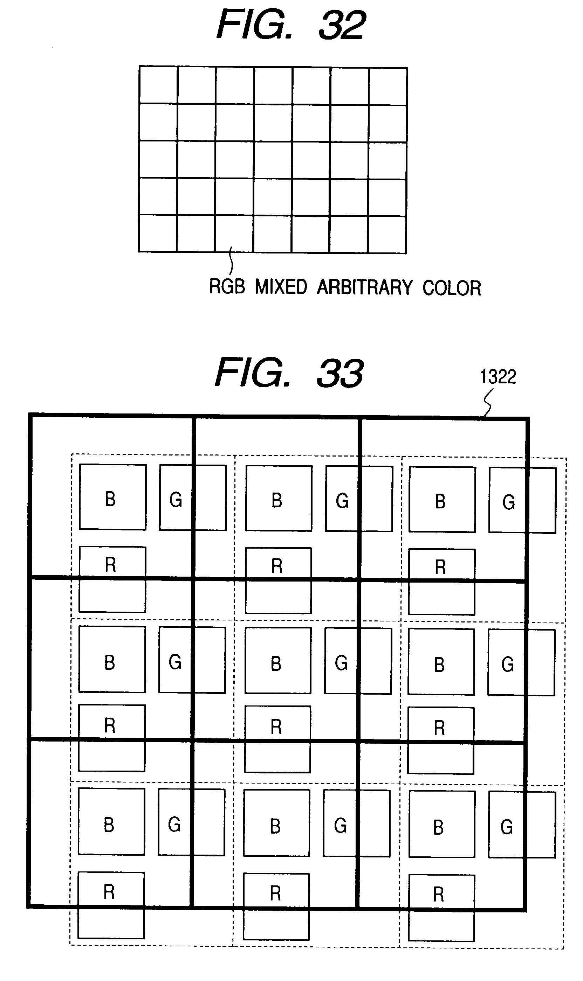

Fig. 33 is an enlarged plan view of a part of another type liquid crystal panel of this embodiment. In this panel, B pixels 1326b are arranged respectively just below each of the centers of microlenses 1322, and G pixels 1326g are placed to give alternate arrangement of B and G in the left-right direction, and R pixels 1326r are placed in vertical direction to give alternate arrangement of B and R. In such an arrangement, the same effect as above example can be achieved by introducing B light perpendicularly and R light and G light obliquely (at the same angle in different direction) to allow the each color light reflected by the RGB pixel units constituting image elements to emit through one and the same microlens. Otherwise, R pixels are placed respectively just below the centers of microlenses 1322, and pixels of other colors are arranged alternately in left-right direction or vertical direction.

### (Embodiment 13)

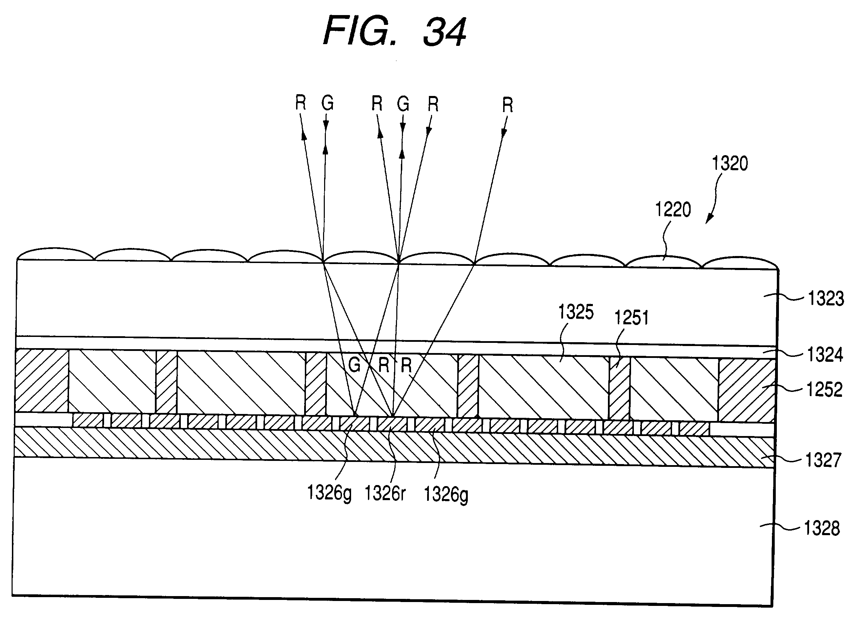

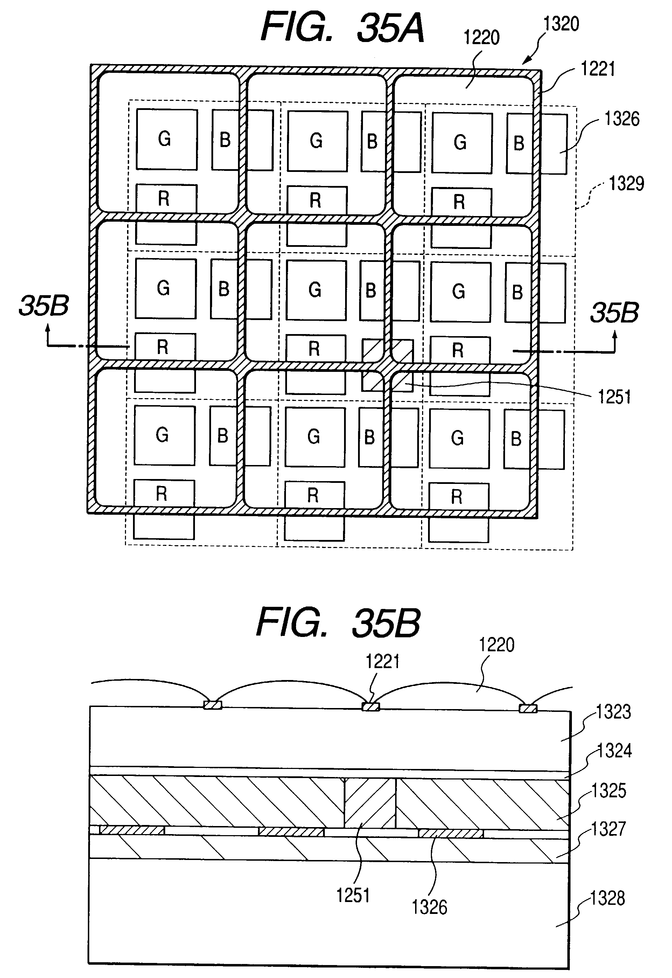

Fig. 34 shows thirteenth embodiment of the liquid crystal panel of the present invention. Fig. 34 is a schematic enlarged cross-sectional view of the main portion of liquid panel 1320 of this Embodiment. This Embodiment is different from the above Embodiment 12 in that a sheet glass 1323 is employed as the counter glass substrate, microlenses 1220 are formed from a thermoplastic resin by a reflow method on sheet glass 1323, and spacer columns 1251 are formed at non-pixel positions from a photosensitive resin by photolithography. Fig. 35A is a partial plan view of liquid panel 1320. In Fig. 35A, spacer columns 1251 are formed at the same pitch as the pixels at the non-pixel positions at the corner of microlenses 1220. Fig. 35B is a sectional view taken along line 35B - 35B in Fig. 35A passing the positions of spacer columns 1251. The spacer columns 1251 are preferably provided in matrix at a pitch of from 10 to 100 pixels so that the contradictory parameters of flatness of sheet glass 1323 and ease of filling of the liquid crystal are simultaneously satisfied. Further in this Embodiment, light-intercepting layer 1221 constituted of a metal film pattern is provided to prevent penetration of leak of light through the border portion of the microlenses. The light-interception prevents the drop of color saturation of the projected picture image caused by light leakage (caused by mixing of the respective primary picture colors), and drop of the contrast of the projected picture image. Accordingly, the projection type display apparatus equipped with the liquid crystal panel 1320 of this Embodiment gives more clear image of high quality.

The above Embodiments 11 to 13 explain liquid crystal panels and projection type display devices. With such a liquid crystal panel or a projection type display devices, a precise and high-quality image can readily be obtained by utilizing the drive wiring of liquid crystal pixels described in Embodiments 1 to 10 in which wiring length and wiring capacitance are controlled between signal lines (e.g., input analog signal lines) or horizontal·vertical shift registers and respective pixels.

The present invention provides a liquid crystal display device in which the influence of a driven liquid crystal pixel on adjacent liquid crystal pixels is removed to obtain a high-quality image, plural pixels can be simultaneously driven, the precharging is conducted to enable high-speed driving, and display of animation image display, not only stationary image can be conducted, high density display like VGA can be conducted, and capacitance coupling to adjacent pixels is decreased.

In a reflection type liquid crystal display device of the present invention, precharging is conducted and plural pixels are simultaneously turned on, and the pixel electrodes are flattened to obtain a precise light flux reflection image. With a projection type liquid crystal display device of the present invention also, high quality, high brightness, and high density of the image can be obtained.

As described above, the projection type liquid crystal display device of the present invention employs a reflection type of liquid crystal panel having microlenses and an optical system for projecting primary colors, whereby reflected rays from a set of R, G, B pixels for one image element, after modulation by a liquid crystal, are emitted through one and the same microlens to display by projection a color image of high quality without causing RGB mosaic.

The light fluxes from the pixels pass respectively through one microlens twice to be almost parallelized. Therefore, a bright projected image can be obtained by use of an inexpensive projection lens of a small numerical aperture. With such a constitution, the liquid crystal display device is capable uniform display.

## Claims

1. A matrix substrate for displaying an image by scanning two-dimensional liquid crystal panel with a vertical shift register and a horizontal shift register, having an array of pixel switches for turning on and off liquid crystal pixels and pixel electrodes for applying voltages to the liquid crystal pixels, wherein the gate of the pixel switch turns on plural lines of the liquid crystal pixels simultaneously for a prescribed time period in accordance with output of the vertical shift register, and signals are written in at least one of the turned-on plural lines of pixels, and the same signals are applied to another line of pixels for precharging.

2. The matrix substrate according to claim 1, wherein the plural lines of the pixels are turned on at the same time, and the timing of the change from the turned-on state to a turned-off state is different for the respective lines.

3. An active matrix type liquid crystal display device for displaying an image by scanning two-dimensional liquid crystal panel with a vertical shift register and a horizontal shift register, having an array of pixel switches for turning on and off liquid crystal pixels and pixel electrodes for applying voltages to the liquid crystal pixels, wherein the gate of the pixel switch turns on plural lines of the liquid crystal pixels simultaneously for a prescribed time period in accordance with output of the vertical shift register, and signals are written in at least one of the turned-on plural lines of pixels, and the same signals are applied to another line of pixels for precharging.

4. The liquid crystal display device according to claim 3, wherein the plural lines of the pixels are turned on at the same time, and the timing of the change from the turned-on state to a turned-off state is different for the respective lines.

5. The liquid crystal display device according to claim 3, wherein the lines turned on simultaneously include an n-th line and a (n+1)th line (n is an integer).

6. The liquid crystal display device according to claim 3, wherein the lines turned on simultaneously include an n-th line and a (n+2)th line (n is an integer).

7. The liquid crystal display device according to claim 6, wherein the polarity of the image signals are reversed for every one horizontal scanning period, or for every one bit.

8. The liquid crystal display device according to any of claims 3 to 7, wherein the liquid crystal panel has a structure of successive lamination of a semiconductor substrate, active matrix driving circuits, pixel electrodes, a liquid crystal layer, transparent counter electrodes, a sheet glass, and microlenses.

9. The liquid crystal display device according to claim 8, wherein the one element of the microlenses is provided for three pixel electrodes.

10. The liquid crystal display device according to claim 8, wherein the microlenses form a microlens glass substrate.

11. A projection type of liquid crystal display apparatus, which employs a liquid crystal display device set forth in any of claims 3 to 8.

12. The projection type of liquid crystal display apparatus according to claim 11, wherein the liquid crystal display device has at least three liquid crystal panel for three colors, and blue light is separated by a high-reflective mirror and a blue-reflecting mirror, and red color light and green light are separated by red-reflecting mirror and a green/blue reflecting dichroic mirror, and the respective liquid crystal panels are projected.

13. A matrix substrate for use in an active matrix type liquid crystal display device, said matrix substrate comprising:
a substrate having an array of pixel switches each for turning on or off a respective liquid crystal pixel, and an array of pixel electrodes, each respective pixel electrode of which is connected to the output side of a respective one of said pixel switches;
a plurality of horizontal gate lines each respective gate line of which is connected to a control gate of each of the pixel switches of a respective horizontal row of said array of pixel switches;
a plurality of vertical data lines, each respective data line of which is connected to the input side of each of the pixel switches of a respective vertical column of said array of pixel switches;
a vertical register, provided on said substrate, the respective output stages of which are connected to respective ones of said horizontal gate lines;
a horizontal register, provided on said substrate, the respective output stages of which are connected to respective ones of said vertical data lines; and
synchronizing means for synchronizing the operation of said vertical and horizontal registers;
characterised in that:
said vertical shift register is adapted to output on-state pulses line sequentially to said plurality of horizontal gate lines whereby adjacent pairs (n, n+1) of said horizontal gate lines or next adjacent pairs (n, n+2) of said horizontal gate lines are held in on-state for a timing determined by a timing overlap of the pulses applied thereto; and
said synchronizing means is adapted to effect a synchronization of the operations of said vertical and shift registers such that a data signal is applied to a respective one of said vertical data lines during said timing both of said horizontal gate lines are held in on-state.

14. A liquid crystal display device comprising:
a matrix substrate according to claim 13;
a counter substrate having thereon a transparent counter electrode with said counter electrode arranged facing said plurality of pixel electrodes; and
a liquid crystal layer sealed between said matrix substrate and said counter substrate.

15. A method of operating the liquid crystal display device of claim 14 wherein:
said vertical shift register is operated and said on-state pulses are applied line sequentially to said horizontal gate lines to hold said respective pairs of horizontal gate lines in on-state for said timing of pulse overlap; and
said horizontal shift register is operated in synchronism therewith, to apply a data signal to a respective one of said vertical data lines during said timing.
